# EUROPÄISCHE PATENTSCHRIFT

(11) **EP 3 513 945 B1**
(45) Veröffentlichungstag und Bekanntmachung des Hinweises auf die Patenterteilung: **18.03.2020**
(21) Anmeldenummer: 19152217.6
(22) Anmeldetag: 17.01.2019
(51) Int. Cl.: B29C 55/16

(54) **VORRICHTUNG ZUM MONO- ODER BIAXIALEN RECKEN VON KUNSTSTOFFMATERIALABSCHNITTEN**
DEVICE FOR MONO- OR BIAXIAL STRETCHING OF PLASTIC MATERIAL SECTIONS
DISPOSITIF D'ÉTIRAGE MONO OU BIAXIALE DES SECTIONS DE MATIÈRE PLASTIQUE

(30) Priorität: 23.01.2018 DE 102018101455
(43) Veröffentlichungstag der Anmeldung: 24.07.2019
(73) Patentinhaber: Brückner Maschinenbau GmbH & Co. KG, 83313 Siegsdorf (DE)
(72) Erfinder: Baumeister, Michael, 53844 Troisdorf (DE); Haigermoser, Thomas, 5760 Saalfeld (AT); Heintel, Christian, 83278 Traunstein (DE)
(74) Vertreter: Flach Bauer Stahl Patentanwälte Partnerschaft mbB

(56) Entgegenhaltungen:
- DE-A1-102009 003 751
- US-A- 3 579 718

## Beschreibung

Die Erfindung betrifft eine Vorrichtung zum mono- oder biaxialen Recken von Kunststoffmaterialabschnitten, insbesondere flächigen oder plattenförmigen Kunststoffmaterialabschnitten gemäß dem Oberbegriff des Anspruchs 1.

Derartige Reckanlagen werden verwendet, um vor allem kleine Folienmuster zu recken. Diese Folienmuster haben üblicherweise eine Größe von ca. 10 cm x 10 cm. Eine derartige Reckanlage, die häufig auch als Reckrahmen bezeichnet wird, ist um ein Vielfaches kleiner als eine Längs-, Quer- und/oder Längs- und Querreckanlage (sog. Sequentielle Reckanlagen), insbesondere in Form einer simultanen biaxialen Reckanlage.

Demgegenüber kann die im Rahmen der vorliegenden Erfindung beschriebene Reckanlage eher als Labor-Reckanlage bzw. Laborreckmaschine bezeichnet werden, um anhand von vergleichsweise kleinen Kunststofffilmabschnitten Reckversuche durchzuführen.

Bei derartigen Reckanlagen soll sichergestellt sein, dass die Folien den gleichen physikalischen Bedingungen während des Reckvorganges unterworfen werden, wie bei großen Längs- und/oder Querreckanlagen. Dazu wird die Folie in einen Rahmen eingelegt, der jeweils zwei um 90° versetzt zueinander liegende Paare von Führungsschienen umfasst, die im Abstand zueinander angeordnet sind und letztlich einen rechteckförmigen oder bevorzugt quadratischen Rahmen erzeugen, auf welchem Kluppen verfahrbar angeordnet sind. Die auf zwei parallel zueinander versetzt liegenden Führungsschienen positionierte erste Gruppe von Kluppen dient dabei zur Verstreckung beispielsweise in einer ersten Richtung (häufig auch Längsrichtung oder MD-Richtung genannt) und die um 90° dazu versetzt an den jeweils beiden anderen Führungsschienen positionierten Kluppen dienen zum Verfahren in einer dazu senkrechten Richtung (auch Querrichtung oder z.B. TD-Richtung genannt). Die Kluppen sind dabei an einem Scherengestänge miteinander verbunden, so dass während dem Reckprozess beim Auseinanderfahlen der jeweils paarweise um 90° versetzten Führungsschienen die Kluppen gleichmäßig zunehmend mehr voneinander beabstandet werden.

Reckrahmen sind im Allgemeinen bekannt, wobei es allerdings verschiedene Arten von Reckrahmen gibt. Prinzipiell unterscheidet man zwischen Reckrahmen mit einer symmetrischen Verstreckung oder mit einem fixen Verstreckungspunkt.

Bei einer symmetrischen Verstreckung sind die erwähnten Paare von Führungsschienen zu einem Mittel- oder Zentralpunkt des Reckrahmens jeweils nur symmetrisch verfahrbar, also gegensinnig voneinander weg oder gegensinnig aufeinander zu.

Eine Vorrichtung zum vorzugsweise diskontinuierlichen und biaxialen Recken von insbesondere aus Kunststoff bestehenden Folien oder Platten mittels am Rand der Folien oder Platten angreifender Kluppen ist beispielsweise aus der DE 1 928 734 U bekannt geworden. Diese Reckvorrichtung umfasst vier in Draufsicht quadratisch zueinander angeordnete Führungsschienen, wobei jeweils ein Paar von gegenüberliegenden Führungsschienen durch eine geeignete Antriebsvorrichtung aufeinander zu und voneinander weg verstellt werden können. Auf diesen Führungsschienen sind über in Draufsicht V-förmig mit unterschiedlichen Winkeleinstellungen zueinander einstellbare Stangen vorgesehen, an denen Kluppen gehalten und geführt sind.

In der Mitte dieser Anordnung kann dann eine zu reckende Folie oder Kunststoffplatte angeordnet und über die Kluppen am Rand fixiert werden. Werden die Führungsstangen dann paarweise nach außen symmetrisch verstellt, so wird z.B. die dazwischen befindliche Folie oder Kunststoffplatte einer Reckung in Längs- und Breitenrichtung simultan unterzogen. Dabei handelt es sich also um eine symmetrische Verstreckung vom Zentrum des Reckrahmens weg in zwei senkrecht zueinander verlaufende Reckrichtungen.

Ein Reckrahmen mit fixem Verstreckungspunkt ist beispielsweise aus der DE 10 2009 003 751 B4 als bekannt zu entnehmen.

Die Besonderheit dieses vorbekannten Reckrahmens ist, dass zwei senkrecht zueinanderstehende Führungsschienen, auf denen Kluppen zum Einspannen und Recken des Filmabschnittes sitzen, unverfahrbar angeordnet sind. In der Ausgangs- oder Einspannposition werden die beiden jeweils gegenüberliegenden Führungsschienen mit den dort positionierten Kluppen auf die feststehenden Führungsschienen von den darauf sitzenden Kluppen zugefahren, um ein möglichst kleines Ausgangs- und Einspannfeld bereitzustellen. In dieser Position kann der zu reckende Kunststofffolienabschnitt beispielsweise mit seiner Ausgangsgröße von 10 cm x 10 cm eingespannt werden. Dann werden jeweils zwei der senkrecht zueinanderstehenden Führungsschienen von den feststehenden Führungsschienen weg verfahren, um die biaxiale Reckung durchzuführen.

Obgleich diese Vorrichtung den Vorteil in sich birgt, dass die Einspannposition am Reckrahmenrand, also an einem Eckbereich vorgesehen ist, so hat sich im Rahmen der Erfindung gleichwohl gezeigt, dass durch einen derartigen Reckrahmen nicht die an sich gewünschten Reckbedingungen erzeugt werden können, die den Reckbedingungen möglichst gleich oder möglichst nah kommen, wie sie auf einer herkömmlichen Längs- und/oder Querreckanlage vorherrschen.

Von daher ist es Aufgabe der vorliegenden Erfindung eine verbesserte Vorrichtung zum mono- oder biaxialen Recken von Kunststoffmaterialabschnitten zu schaffen, insbesondere in Form von Kunststofffolien, Kunststoffplatten, Kunststoffmembranen oder beispielsweise Kunststoffgewebe etc., die gegenüber den bisher bekannt gewordenen Lösungen überlegen ist.

Die Aufgabe wird erfindungsgemäß entsprechend den im anspruch 1 angegebenen Merkmalen gelöst. Vorteilhafte Ausgestaltungen der Erfindung sind in den Unteransprüchen angegeben.

Die erfindungsgemäße Lösung baut darauf auf, dass - wie ebenfalls grundsätzlich aus dem Stand der Technik bekannt ist - in einem Reckrahmen der Reckprozess selbst symmetrisch oder im Wesentlichen symmetrisch durchgeführt wird. D.h. der eingespannte Kunststoffmaterialabschnitt beispielsweise in Form des Kunststofffolien- oder Kunststofffilmabschnittes oder in Form einer Kunststoffplatte, einer Kunststoffmembran oder eines Kunststoffgewebes wird in der Reckvorrichtung mittig eingespannt in dieser Ausgangslage gehalten, um dann jeweils die parallel und im Abstand zueinander angeordneten Führungsschienen mit den darauf sitzenden Kluppen voneinander weg zu bewegen. Erfolgt dies nur in einer Richtung, so wird die Reckung monoaxial durchgeführt. Erfolgt dies gleichzeitig in zwei senkrecht zueinander stehenden Richtungen, so wird die Reckung biaxial durchgeführt, und zwar in der Regel simultan, obgleich auch bei einer biaxialen Reckung grundsätzlich erst das eine Paar von Führungsschienen mit den darauf sitzenden Kluppen und dann zeitlich versetzt die an dem um 90° versetzt liegenden Führungsschienen positionierten Kluppen entsprechend voneinander weg verfahren werden können, um zunächst eine Reckung beispielsweise in MD-Richtung oder anschließend in TD-Richtung durchzuführen (oder umgekehrt) .

Allerdings weist dieser an sich überlegene Reckprozess den Nachteil auf, dass der zu reckende Filmabschnitt mittig in dem Reckrahmen eingesetzt werden muss.

Die Erfindung schafft nunmehr vor allem eine Lösung dahingehend, dass eine optimale Reckung für Kunststoffmaterialabschnitte durchgeführt werden kann, und zwar mit Bedingungen, die einem Reckprozess in einer Längs- und/oder Querreckanlage sehr nahe kommen, und dass gleichwohl eine einfache Möglichkeit besteht, einen zu reckenden Kunststoffmaterialabschnitt in die Kluppen einzulegen. Es handelt sich also bei den erwähnten Kunststoffmaterialabschnitten um eher flächige Gebilde, d.h. wie erwähnt beispielsweise in Form eines Kunststofffilmabschnittes, Kunststofffolienabschnittes, einer Kunststoffplatte, einer Kunststoffmembran oder eines Kunststoffgewebes, also Körper und Gebilde, die eher eine zweidimensionale Form aufweisen, insbesondere im Verhältnis zur Dicke des Körpers oder Materials. Dabei wird nachfolgend der Einfachheit halber v.a. lediglich von Kunststoffkörper oder beispielsweise von Kunststofffilmabschnitt oder nur Filmabschnitt gesprochen, ohne dass dies im einschränkenden Sinne verstanden werden soll.

Erfindungsgemäß wird dies dadurch realisiert, dass das Einstellfeld, mit den aufeinander zu verfahrenden Führungsschienen und den insoweit in geringem Abstand zueinander positionierten Kluppen, nicht in einer mittigen Lage im Reckrahmen durchgeführt wird, sondern in einer außermittigen Seitenlage, in der das Einspannfeld vergleichsweise dicht und benachbart zu einer Seitenbegrenzung der Reckvorrichtung zu liegen kommt. Anschließend kann dann das Einspannfeld mit dem eingespannten Filmabschnitt in eine demgegenüber eher mittige oder zumindest näherungsweise mittige Position in der Reckvorrichtung verfahren werden, um vor allem dann von dieser Ausgangsposition ausgehend den eigentlichen Reckprozess durchzuführen.

Die erfindungsgemäße Lösung zeichnet sich also alternativ und ergänzend zur vorbeschriebenen Lösung dadurch aus, dass zumindest ein Paar von Führungsschienen nicht nur aufeinander zu und zur Durchführung des Reckprozesses voneinander weg bewegbar sind, sondern auch in gleicher Richtung gleichzeitig oder zeitlich versetzt zueinander in lediglich einer Richtung bewegt werden können, nämlich zum einen zu der am Rand der Reckvorrichtung liegenden Einspannposition und anschließend zu einer eher mittigen Ausgangslage, um von dieser Position aus dann die Reckung durchzuführen.

Die um 90° versetzt dazu angeordneten Führungsschienen können, wie bisher auch, so angetrieben werden, dass sie entweder zur Durchführung des Reckschrittes voneinander weg oder zur Rückführung in die Ausgangslage aufeinander zu verfahren werden können.

In einer bevorzugt Ausführungsform kann das zusätzliche Verfahren hin zu einer Einspannposition bzw. von einer Einspannposition weg zur einer Reck-Ausgangsposition beispielsweise durch zwei Motoren mit getrennten Antriebseinrichtungen beispielsweise in Form jeweils eines Antriebstrumen erfolgen, die jeweils eine der beiden parallel zueinander verlaufenden und im Seitenabstand zueinander angeordneten Führungsschienen antreiben und damit verfahren. Durch geeignete Übertragungsmechanismen z.B. in Form von Getrieben oder Zwischengetrieben kann ein derartiger Antrieb unter Umständen auch durch einen einzigen Motor realisiert werden.

Bevorzugt ist zum Auseinanderfahren oder Aufeinanderzufahren der dazu um 90° versetzt liegenden Führungsschiene ein zweiter Motor vorgesehen, der ähnlich wie bei einem Schiebetürantrieb, einen um zwei versetzt zueinander liegenden Walzen oder Umlenkräder, beispielsweise kettenförmige Übertragungseinrichtungen, Trumen aufweist, wobei der Obertrumen dieser beispielsweise ketten- oder gurtförmigen Übertragungseinrichtung mit der einen Führungsschiene und der Untertrumen dieser beispielsweise ketten- oder gurtförmigen Übertragungseinrichtung mit der anderen Führungsschiene verbunden ist, beispielsweise jeweils über einen Mitnehmer. Dadurch werden durch die erwähnte umlaufende Antriebsrichtung oder Übertragungseinrichtung entweder beide Führungsschienen aufeinander zu bewegt oder durch Richtungsumkehr des Antriebsmotors voneinander weg verfahren.

Die erwähnte Antriebs- und/oder Übertragungseinrichtung, die von dem Antriebsmotor in zwei entgegengesetzte Umlaufrichtungen antreibbar ist, kann durch alle geeigneten Maßnahmen realisiert sein, beispielsweise durch einen Riemenantrieb oder Kettenantrieb, der vorzugsweise mit zusätzlichen Kettenspannern oder Kettenspanngliedern etc. versehen ist.

Obgleich im Stand der Technik bereits vorgesehen war, dass ein Reckrahmen mit eingelegten Folienabschnitten von seiner Bestückungs- oder Einlegeposition, in welcher der Folienabschnitt in den Reckrahmen eingelegt wird, in einen Ofen verfahren werden kann, um dort die Reckung durchzuführen, ist in einer bevorzugten Weiterbildung der Erfindung nunmehr vorgesehen, dass die Vorrichtung nunmehr zum Recken eines Folienabschnittes mehrere bevorzugt hintereinander angeordnete Öfen aufweist, und zwar mit Abtrenneinrichtungen zwischen den Öfen, die gegenüber bisherigen Lösungen weitergehend verschließbar sind. Zwar hat der Stand der Technik auch bereits sogenannte Shutter-Blenden gekannt, um zwei benachbart zueinander angeordnete Öfen voneinander zu trennen, wenn der Reckrahmen von einem Ofen in den nächsten verfahren wurde. Allerdings sind die bisherigen Shutter-Blenden nie komplett schließbar gewesen, so dass immer noch ein nicht zu vernachlässigender Wärme-Luftstromaustausch zwischen der Innenseite des Ofens und der Außenseite verursacht wurde.

Dabei können bevorzugt die im Rahmen der Erfindung vorgesehenen Öfen der Realisierung unterschiedlicher Schritte dienen. So kann ein Ofen zur Erwärmung des Folienabschnittes dienen, wohingegen ein zweiter dahinter angeordneter Ofen als erste Annealing-Zone und ein beispielsweise nochmals darauf folgender, dritter Ofen als weitere Annealing-Zone oder Kühlzone mit anderen Temperaturbedingungen fungieren kann.

Ferner kann bevorzugt nicht nur eine passive Luftzufuhr in den Öfen sondern auch eine aktive Luftzufuhr vorgesehen sein, vorzugsweise entweder oberhalb oder unterhalb des zu reckenden Folienabschnittes. Möglich ist aber auch eine aktive Luftzufuhr sowohl oberhalb als auch unterhalb des zu reckenden Folienabschnittes zu realisieren. Der Luftstrom könnte dabei aber auch schon vortemperiert sein.

Weitere bevorzugte Verbesserungen ergeben sich beispielsweise dadurch, dass die Luftzufuhr in den Öfen mittels Ventilatoren erfolgt, die nicht über Riemen oder Keilriemen angetrieben werden, sondern die direkt auf der Welle eines Ventilatormotors sitzen. Die Vorrichtung ist dadurch leiser und wartungsfreundlicher.

Zudem hat sich als günstig erwiesen, die gesamte Vorrichtung zum Recken eines Filmabschnittes mit entsprechenden Isolierungen zu versehen, nämlich jeweils oberhalb und unterhalb und seitlich des verfahrbaren Reckrahmens, so dass zusammen mit dem Schlitten ein geschlossener, isolierter Raum entsteht.

Darüber hinaus werden nochmals verbesserte Reckergebnisse dann erzielt, wenn ein zu reckender Filmabschnitt in einem Ofen nicht mittels eines Infrarotheizers aufgeheizt wird (denn dann kann die Aufwärmung erst erfolgen wenn der zur reckende Filmabschnitt sich im Ofen befindet), sondern beispielsweise über bevorzugt vorgeheizte Luft, so dass der zu reckende Folienabschnitt in einem bereits vorgeheizten Ofen einfahren kann.

Eine weitere Verbesserung lässt sich auch dadurch erzielen, dass gegenüber dem Stand der Technik verbesserte Kluppen zum Einsatz kommen. Wie erwähnt sind die Kluppen auf den einzelnen Führungsschienen frei beweglich, auch wenn beispielsweise eine mittig in dem gesamten Reckrahmen zu liegende Kluppe während des Reckschritts nicht in Längsrichtung der Führungsschiene verfahren wird. Bevorzugt wird eine mittlere Kluppe als sogenannte Messkluppe verwendet, bei der also bevorzugt keine Relativbewegung gegenüber der sie tragenden Führungsschiene stattfindet.

Dazu ist ein Haltemechanismus für die Kluppen vorgesehen, der z.B. jeweils Biege- oder Dehnungs-Messeinrichtungen beispielsweise in Form von sogenannten Biege- oder Dehnungsmessstreifen aufweist. Mit diesen kann die Kraft gemessen werden, mit der die Folie gedehnt wird. Die bevorzugte Lösung zeichnet sich also dadurch aus, dass auch die bevorzugt mittig vorgesehenen Messkluppen an der jeweils zugehörigen Führungsschiene frei beweglich und dort nicht fest fixiert sind (obgleich sich eine mittlere Kluppe während des Reckprozesses aufgrund des symmetrischen Reckvorganges von ihrer mittleren Position auf der Führungsschiene nicht weg bewegt) und dass die Biege- oder Dehnungs-Messeinrichtung vorzugsweise in Form des sogenannten Biege- oder Dehnungsmessstreifen parallel oder zumindest näherungsweise parallel oder in der Ebene zur Ebene des zu reckenden Filmabschnittes liegt.

Bevorzugt können die Kluppen mittels Luftdrucksteuerung oder Stickstoffsteuerung geschlossen und beim Lüften des Arbeitszylinders mittels eines integrierten Federkraftspeichers geöffnet werden.

Die eigentlichen Klemmflächen der Kluppen-Klemmabschnitte und/oder des Kluppentisches, auf welchem der Klemmabschnitt der Kluppeneinklemmeinrichtungunter Fixierung des Randes des Filmabschnittes aufsitzt, können je nachverwendetem Filmmaterial unterschiedlich gestaltet sein. Es kommen eher zackige Klemmflächen in Betracht, ebenso wie eher glatte Klemmflächen oder gummierte Klemmflächen. Einschränkungen bestehen insoweit nicht.

Die erläuterte Vorrichtung zum Recken von Folien-Filmabschnitten ist für unterschiedliche Kunststoffmaterialien grundsätzlich geeignet, ebenso auch für unterschiedlich einstellbare Reckbedingungen. So können mit der erläuterten Vorrichtung bevorzugt Kunststoffe, wie z.B. PP, PET, PEA, PS, PVC, PTFE und dgl. gereckt werden. Dies kann jeweils in einem ideal einstellbaren Temperaturfenster erfolgen, und zwar mit unterschiedlichsten Reckgeschwindigkeiten und Reckraten.

Nach Durchführung eines Reckvorganges mit der geschilderten erfindungsgemäßen Reckvorrichtung können dann an dem gereckten Folienabschnitt beispielsweise in einem Labor Untersuchungen durchgeführt werden, so dass anhand der Ergebnisse dieser Untersuchungen Rückschlüsse insoweit möglich sind, wie eine entsprechende Folie mit gleicher Zusammensetzung auf einer großen Reck-Produktionsanlage hergestellt werden kann.

Mit der erfindungsgemäßen Vorrichtung ist es ebenfalls möglich durch eine Reihe von Versuchen eine optimale Rohstoffmischung und die Anteile der jeweils bevorzugten Additive aufzufinden und zu testen, um ein optimales Produkt mit verbesserten Eigenschaften herstellen und/oder beispielsweise auch Rohstoffe einsparen zu können, insbesondere dann, wenn sich beispielsweise durch die nachfolgenden Untersuchungen herausgestellt hat, dass auch bei einer geringeren Foliendicke sich dieselben bevorzugten Folieneigenschaften einstellen.

Zusammenfassend kann also festgehalten werden, dass der erfindungsgemäße Reckrahmen insbesondere im Umfang seiner bevorzugten Ausführungsform und Weiterbildung eine Reihe von Vorteilen aufweist. Während es also bei Reckrahmen mit einem fixen Verstreckungspunkt, wie in der DE 10 2009 003 751 B4 abgehandelt, es nicht möglich ist, ein gleichmäßiges Strecken oder Recken zu gewährleisten, wird dies im Rahmen der vorliegenden Erfindung realisiert und dies bei gleichwohl optimalen Einlege- und Einspannbedingungen asymmetrisch verfahrenem Reckrahmen. Bei Verwendung des an die Einspann- und Rahmenposition des Reckrahmens sich unmittelbar anschließenden Ofens bzw. der Öfen kann im Rahmen der Erfindung gemäß einer bevorzugten Ausführungsform die gewünschte Temperatur bereits beim Einfahren der Folienprobe voreingestellt sein. Dies kommt dann auch den Realbedingungen auf einer großen herkömmlichen Reckanlage sehr viel näher. Ein weiterer großer Vorteil ist bei Verwendung von mehreren Öfen, dass diese mit verschiedenen Temperaturen verwendet werden können. Bevorzugt sind dann die verschiedenen Öfen durch Shutter voneinander getrennt. Sobald die Folienprobe im Reckrahmen in den jeweiligen Ofen hineinfährt, öffnet sich der Shutter und schließt sich wieder, sobald die Folie im jeweiligen Ofen ist. So kann auch der jeweilige Ofen optimal auf Temperatur gehalten werden.

Die Erfindung wird nachfolgend anhand von Zeichnungen näher erläutert. Dabei zeigen im Einzelnen:
- Figur 1a:: eine schematische Gesamtsicht einer Vorrichtung zum Recken von Folienabschnitten mit zwei nachgeordneten Öfen;
- Figur 1b:: eine Abwandlung gegenüber Figur 1a mit einer Vorrichtung zum Recken (Reckanlage) mit drei nachgeordneten Öfen;
- Figur 2:: eine schematische räumliche Draufsicht auf einen erfindungsgemäßen Reckrahmen mit darin verfahrbar angeordneten Führungsschienen und darüber gehaltenen Kluppen;
- Figur 3a, 3b:: zwei ausschnittsweise wiedergegebene Führungsschienen mit darauf befindlichen Kluppen, die über ein Scherengetriebe miteinander gekoppelt sind;
- Figur 4a bis 4c:: drei schematische Darstellungen zur Erläuterung, wie zwei parallel zueinander verlaufende Führungsschienen nur gleichzeitig aufeinander zu und voneinander weg und ein dazu senkrecht verlaufendes zweites Paar von Führungsschienen zudem getrennt voneinander in zwei gegensinnigen Richtungen verfahrbar sind;
- Figur 5a, 5b, 5c:: drei schematische Draufsichten auf den erfindungsgemäßen Reckrahmen und zwar einmal in seiner außermittigen Bestückungsposition, seiner mittigen Startposition zu Beginn eines Reckvorganges und am Ende des durchgeführten Reckvorgangs;
- Figur 6:: eine räumliche Seitendarstellung einer Kluppe mit zugehöriger Trag- und Messeinrichtung zur Messung der an der Kluppe ansetzenden Reckkräfte;
- Figur 7:: eine entsprechende Darstellung zu Figur 6, in schematischer Seitenansicht;
- Figur 8:: eine auszugsweise vergrößerte Darstellung von Figur 7 teilweise im Vertikalschnitt;
- Figur 9:: eine vergrößerte räumliche Detaildarstellung einer an einer Gelenkkette angeordneten Kluppe, die auf einer Führungsschiene verfahrbar ist;
- Figur 10a bis 10d:: vier schematische Darstellungen unterschiedlicher an der Unterseite der Kluppeneinklemmeinrichtung auswechselbar anbringbare Klemmbacken mit unterschiedlichen Klemmoberflächen oder Kontaktbereichen;
- Figur 11a bis 11d:: entsprechende unterschiedliche Darstellungen, bevorzugt an einem KluppentischUnterbau auswechselbar montierbare Klemmbacken mit unterschiedlichen Klemm-Oberflächen;
- Figur 12, 13:: zwei schematische Seitenansichten bezüglich zweier nacheinander vorgesehener Öfen mit jeweils einem Ofenoberteil und einem Ofenunterteil zwischen denen der Reckrahmen hindurch verfahrbar ist;
- Figur 14:: eine vereinfachte räumliche Darstellung eines erfindungsgemäßen Ofens mit vorgesehenen Ventilator und Motorantrieb;
- Figur 14a:: eine Draufsicht auf die eines zu behandelten Kunststoffmaterialabschnittes zugewandt liegenden Unter- bzw. Oberseite eines Ofens mit Luftansaugöffnungen und einer Ausblasöffnung oder Ausblaszone in Richtung des noch ungereckten Kunststoffmaterialabschnittes (im Falle eines Reckofens) ;
- Figur 14b:: eine entsprechende Darstellung zu Figur 14a, jedoch für einen Ofen nach erfolgter Reckung des Kunststoffmaterialabschnittes, insbesondere für eine Nachbehandlung und/oder Annealing-Zone mit gegenüber Figur 14a vergrößerter Ausblasöffnung;
- Figur 15a, 15b:: eine schematische Seitenansicht und eine eher räumliche Ansicht zweier nacheinander vorgesehener Öfen mit jeweils einem oberen und einem unteren Ofen, die einmal passiv belüftet und einmal aktiv belüftet sind;
- Figur 16:: eine seitliche Darstellung eines Ofens zur Verdeutlichung, dass zwischen den oberen und den unteren Öfen jeweils Isolierungen beidseitig des Verstellweges für den Reckrahmen vorgesehen sind, die lediglich im Bereich der Öfen Ausnehmungen aufweisen;
- Figur 17:: eine perspektivische Darstellung der in Figur 16 in Seitendarstellung gezeigten Isolierungen vorzugsweise in Form von Isolierplatten; und
- Figur 18:: eine ergänzende Darstellung eines oberen und unteren Ofens mit gegensinnig ausgerichteten Motoren zum Antrieb von im Inneren der Öfen befindlichen Ventilatoren.

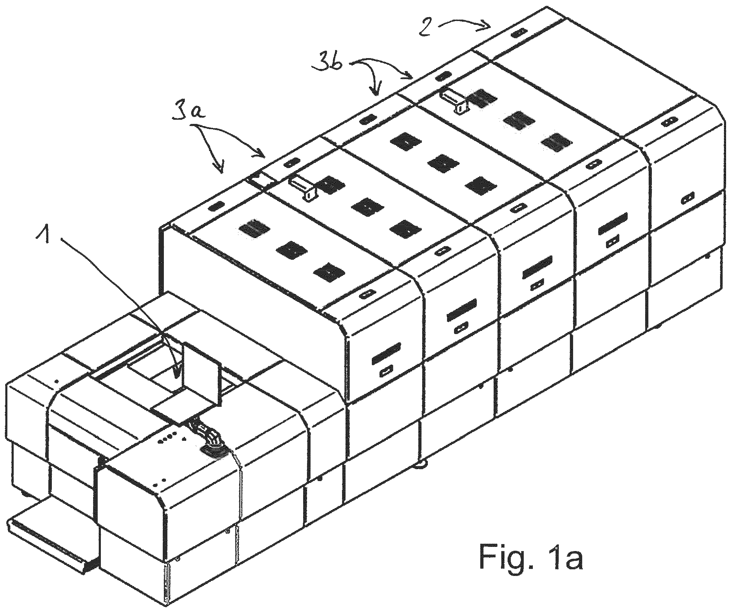

Anhand von Figur 1a ist ein schematischer Aufbau einer Vorrichtung zum Recken eines Folienabschnittes gezeigt.

Die Vorrichtung umfasst eine Bestückungs- und/oder Entnahmezone 1, die in der Regel zumindest beim Bestücken mit einem zu reckenden Folienabschnitt frei zugänglich liegt.

Im gezeigten Ausführungsbeispiel umfasst die Vorrichtung zum Recken (wobei nachfolgend teilweise auch von einer Reckvorrichtung oder einer Reckanlage gesprochen wird) neben der Bestückungs- und/oder Entnahmezone 1 zumindest noch zwei in einer Längsrichtung nacheinander vorgesehene Öfen 3a, 3b, wobei üblicherweise nach dem letzten Ofen, bei der Variante gemäß Figur 1a noch ein Schaltschrank 2 vorgesehen ist. In die Öfen kann ein nachfolgend noch erörterter Reckrahmen zur Durchführung einer Reckung und/oder zur Durchführung eines Halte-, Schrumpf- und/oder Kühl- oder Aufheizvorgangs oder eines Annealing- oder Kühl-Vorgangs hinein und wieder raus bewegt werden.

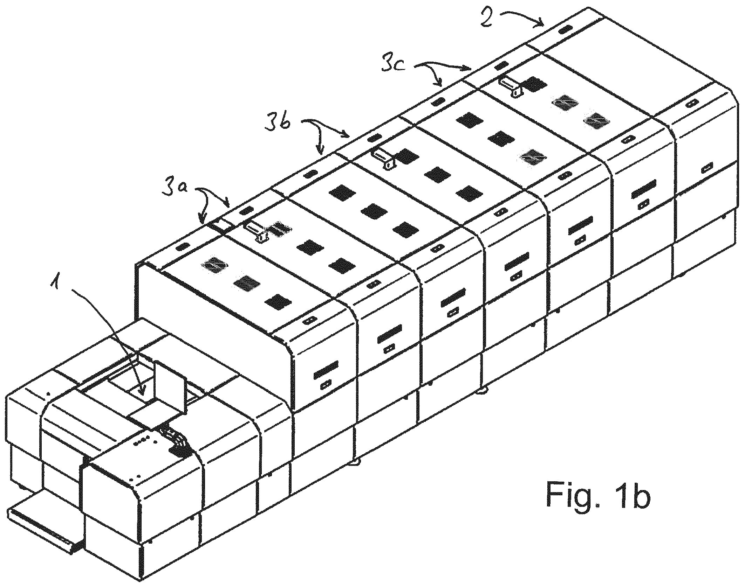

Die Variante gemäß Figur 1b unterscheidet sich von dem Ausführungsbeispiel nach Figur 1a dadurch, dass nicht nur zwei Öfen sondern drei aufeinanderfolgende Öfen 3a, 3b und 3c vorgesehen sind, wobei sich dann noch der erwähnte Schaltschrank 2 anschließt. Dabei wird an dieser Stelle angemerkt, dass sowohl bei der Ausführungsvariante nach Figur 1a wie bei dem Ausführungsbeispiel nach Figur 1b der Schaltschrank nur optional ist, d.h. er kann auch an völlig anderer Stelle stehen und muss sich nicht zwangsläufig hinter den gezeigten Öfen am Gehäuse anschließen. Ferner angemerkt, dass die Ausführungsbeispiele nach Figur 1a bzw. 1b nur beispielhaft wiedergegeben werden, die erfindungsgemäße Vorrichtung zum Recken ggf. auch nur einen einzigen Ofen oder beispielsweise auch mehr als drei Öfen, d.h. beispielsweise zumindest vier Öfen oder zumindest fünf Öfen umfassen kann.

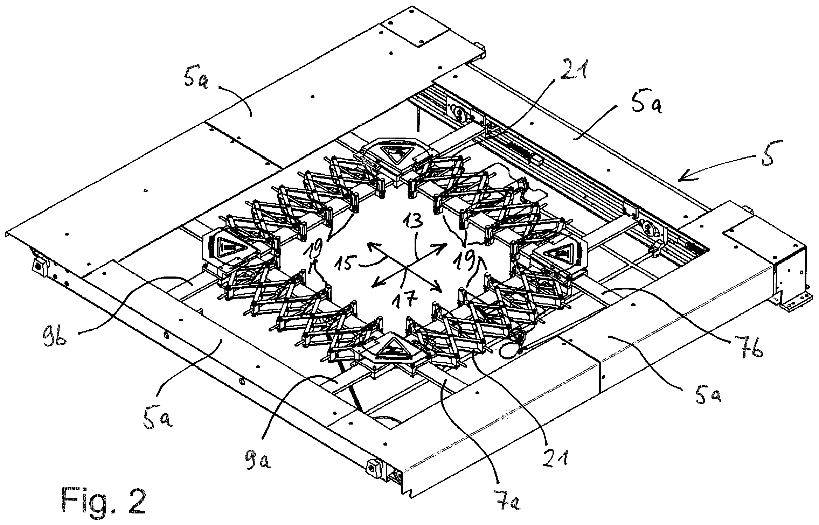

Die Vorrichtung zur Reckung eines Folienabschnittes ist grundsätzlich in Räumlicher Darstellung nach Art eines Reckrahmens 5 (Figur 2) gestaltet, und zwar insbesondere mit einem umlaufenden Rahmen 5a.

Wie in schematischer Räumlicher Darstellung gemäß Figur 2 dargestellt ist, sind innerhalb des Reckrahmens 5 jeweils zwei Paare von Führungsschienen 7a, 7b und 9a, 9b angeordnet.

Dabei bilden die beiden parallelen, jeweils mit Seitenversatz zueinander angeordneten Führungsschienen 7a, 7b zwei erste Führungsschienen, die gemäß der Doppelpfeildarstellung 13 in einer ersten Richtung voneinander weg bzw. aufeinander zu verfahren werden können. Dabei kann die Verstellung gemäß der Doppelpfeildarstellung 13 auch als Verstellung in Längsrichtung (auch häufig MD-Richtung genannt) bezeichnet werden.

Das zweite Paar von Führungsschienen 9a, 9b ist ebenfalls mit Seitenversatz zueinander innerhalb des Reckrahmens 5 angeordnet, und zwar in senkrechter Ausrichtung zu den ersten Führungsschienen 7a, 7b. Auch diese zweiten Führungsschienen 9a, 9b sind gemäß der Doppelpfeildarstellung 15 voneinander weg oder aufeinander zu verfahrbar, und zwar bevorzugt wie die ersten Führungsschienen jeweils symmetrisch zu einem Mittel- oder Zentralpunkt 17 des Reckrahmens 5.

Auf jeder der Führungsschienen 7a bis 9b sind jeweils mehrere Kluppen 19 angeordnet, wobei die auf einer Führungsschiene 7a bis 9b angeordneten Kluppen 19 über eine Gelenkkette 21 miteinander verbunden sind, welche auch unter dem Namen "Nürnberger Schere" (engl. auch als Lazy Tongs bezeichnet) bekannt ist. Teilweise wird insoweit auch von einem Scherengitter gesprochen.

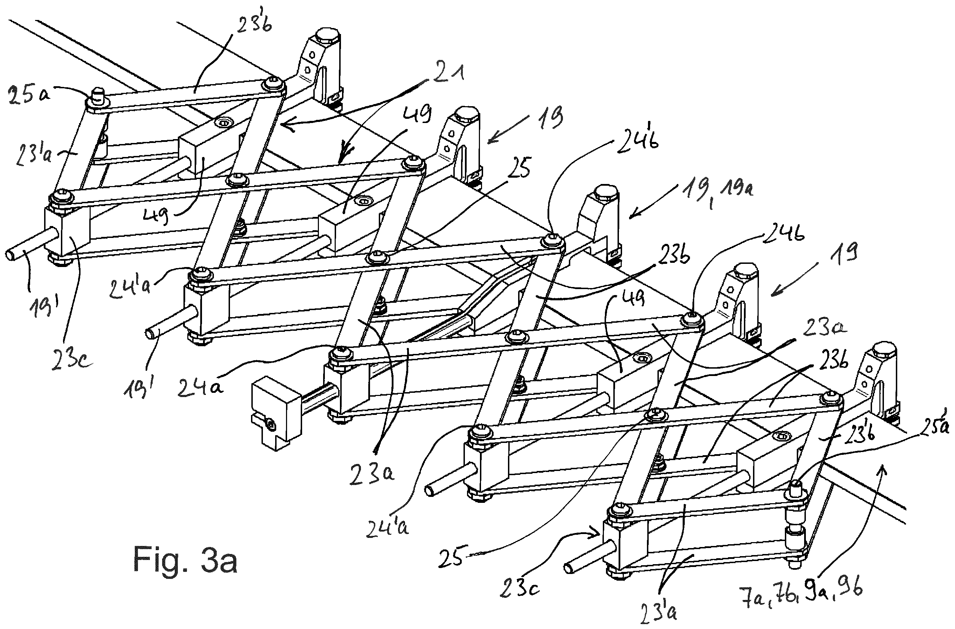

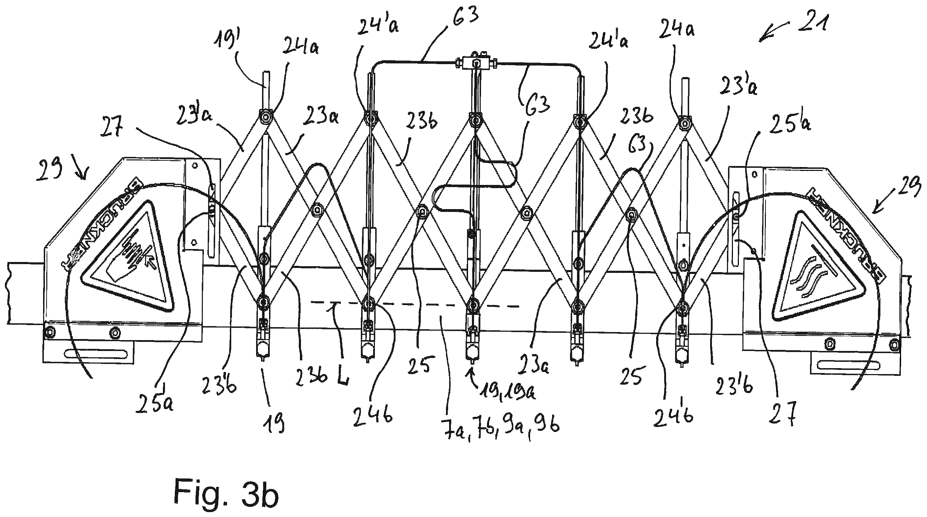

Diese Gelenkkette 21 ist auszugsweise in vergößerter Detaildarstellung in Räumlicher Darstellung bzw. Draufsicht für eine Führungsschiene 7a, zb oder 9a, 9b anhand von Figuren 3a und 3b gezeigt.

Diese Gelenkkette 21 ("Nürnberger Schere") besteht aus mehreren gekreuzten Stäben oder Scherenhebel 23a und 23b die mehr oder weniger in einer Ebene parallel zu einer Führungsschiene angeordnet sind. Dabei werden zur Bildung der erwähnten Gelenkkette 21 jeweils zwei zick-zack-förmig zueinander verlaufende Scherenhebel-Anordnungen verwendet. Aus Figur 3a ist dabei zu ersehen, dass eine erste Scherenhebelanordnung mit zick-zack-förmig angeordneten ersten Scherenhebel 23a und einer zweite Scherenhebelanordnung mit dazu versetzt und gegenläufig angeordneten, sich ebenfalls zick-zack-förmig verlaufenden Scherenhebel 23b vorgesehen ist. So sind jeweils zwei aufeinanderfolgende Scherenhebel 23a jeweils V-förmig zueinander verlaufend positioniert, wobei jeweils zwei aufeinanderfolgende in Draufsicht V-förmig angeordnete erste Scherenhebel 23a beispielsweise über Kluppen-fernere Gelenke oder Gelenkachsen 24a gelenkig miteinander verbunden sind. An dem zu dem Gelenk oder der Gelenkachse 24a gegenüberliegenden Ende der jeweiligen ersten Scherenhebel 23a sind diese wiederum mit einem weiteren ersten Scherenhebel 23a über ein Kluppennäheres Gelenk oder einer zu den Kluppen näherliegende Gelenkachse 24b verbunden. Dadurch wird die erste zick-zack-förmige Scherenhebel-Anordnung gebildet.

Ferner ist die erwähnte zweite Scherenhebel-Anordnung vorgesehen, wobei die Scherenhebel 23b entsprechend V-förmig angeordnet sind, wobei jeweils zwei aufeinanderfolgende Scherenhebel 23b über Kluppen-fernere Gelenke oder Gelenkachsen 24'a bzw. Kluppen-nähere Gelenkachsen 24'b mit einem jeweils nächsten zweiten Scherenhebel 23b ebenfalls gelenkig verbunden sind.

Beide zick-zack-förmig verlaufenden Scherenhebel-Anordnungen zum einen mit dem Scherenhebel 23a und zum anderen mit dem Scherenhebel 23b sind dann so versetzt zueinander angeordnet, dass sich jeweils ein erster Scherenhebel 23a mit einem zweiten Scherenhebel 23b kreuzt und dabei an der Kreuzungsstelle über einen mittigen Drehpunkt oder eine mittige Drehachse 25 gelenkig miteinander verbunden sind.

Die anhand von Figur 3a gezeigte Gelenkkette 21 ist bezüglich aller vier Führungsschienen 7a, 7b bzw. 9a, 9b verwirklicht, weshalb in Figur 3a für die dort gezeigte alleinige Führungsschiene alle vier Bezugszeichen 7a, 7b, 9a, 9b eingezeichnet sind.

An den in Richtung der jeweiligen Führungsschiene 7a, 7b oder 9a, 9b gegenüberliegenden Endbereichen jeder der vier Gelenkketten 21 sind dann die ersten Scherenhebel 23'a und die damit zusammenwirkenden zweiten Scherenhebel 23'b nur mit etwa halber Länge ausgebildet, so dass deren gemeinsame Drehachse 25'a bevorzugt in einer Führungseinrichtung 27 endet und darin senkrecht zur Erstreckungsrichtung der Führungsschiene verstellbar geführt ist. Dies ist in der schematischen Draufsicht gemäß Figur 3b zu sehen. Die etwa nur halb so langen au-ßenliegenden Scherenhebel sind mit dem Bezugszeichen 23'a bzw. 23'b bezeichnet.

Aus Figur 3a ist ebenfalls zu ersehen, dass die Gelenckette 21 quasi doppelt ausgebildet ist und zwei in Draufsicht übereinander deckungsgleich angeordnete Gelenkketten mit Scherenhebel 23a und 23b umfasst, die in einem geringeren Abstand voneinander angeordnet sind, der allerdings so ausreichend ist, dass die bevorzugterweise in Richtung Mitte des Reckrahmens vorstehenden Gelenkpunkte 24b der Scherenhebel 23b oberhalb und unterhalb der betreffenden Führungsschiene 7 oder 9 zu liegen kommen.

Die erwähnten im Bereich der Kluppen 19 vorgesehenen Gelenkpunkte 24b sind an diesen Stellen ortsfest mit den Kluppen oder Kluppenkörper verbunden, so dass bei der Draufsicht gemäß Figur 3b die Achsen 24b und die zugehörigen Kluppen 19 unabhängig von der Spreizungsbewegung der Gelenkkette 21 immer bezüglich der Breite der Führungsschiene an gleicher Position verbleiben, also verschieblich gegenüber der jeweiligen Führungsschiene nur der strichlierten Linie L gemäß Figur 3b sind.

Die vertikalen und zu den Kluppen 19 entfernt liegenden Drehachsen 24a bzw. 24'a umfassen noch Abstandskörper 23c, wodurch die obere und die untere Ebene der Scherenhebel 23a und 23b auf Abstand gehalten werden. Die Kluppen-nahen vertikalen Gelenkachsen 24b und 24'b liegen dabei in Draufsicht im Bereich der jeweiligen Führungsschiene, so dass hier die Gelenkachsen nicht zwischen der oberen und unteren Ebene der jeweiligen Scherenhebel-Anordnung durchgängig ist sondern jeweils ein für die obere und die untere Ebene ein getrenntes in Draufsicht deckungsgleiches Gelenk 24b bzw. 24'b vorgesehen ist, zwischen denen die jeweilige Führungsschiene hindurch verläuft.

Wie erwähnt, sind also die Kluppen-nahen Gelenkachsen 24b und 24'b jeweils mit den zugehörigen Kluppenkörpern verbunden. Die erwähnten Abstandskörper 23c zwischen der oberen und unteren Ebene der Scherenhebel 23a und 23b sind mit einer vorzugsweise in Form einer Bohrung ausgebildeten Führung versehen, durch die hindurch ein mit dem sich senkrecht zum Verlauf der jeweiligen Führungsschiene erstreckender Verlängerungsabschnitt 19' hindurch erstreckt, wobei dieser Verlängerungsabschnitt 19' fest mit einer die Kluppe oder den Kluppenkörper 19 tragenden Stütz- und Tragkonstruktion 49 verbunden ist, welche dann in den von dem Kluppenkörper 19 weg führenden Verlängerungsabschnitt 19' übergeht, so dass beim Auseinanderfahren oder Zusammenfahren der Gliederkette die betreffenden Kluppenkörper längs der Führungsschiene unter Erzeugung eines größeren Seitenabstandes zueinander auseinander gefahren oder unter Verringerung ihres Seitenabstandes zu einer benachbarten Kluppe aufeinander zu verfahren werden und dabei stets die Kluppenkörper in senkrechter Ausrichtung zum Verlauf der jeweiligen Führungsschiene verbleiben.

Wird die jeweilige Gelenkkette 21 längs der Führungsschiene auseinander gefahren, wobei sich der seitliche Kluppenabstand zwischen zwei benachbarten Kluppen vergrößert, dann gleiten die Abstandskörper 23c auf den im gezeigten Ausführungsbeispiel stabförmigen Verlängerungsabschnitt 19' in Richtung Führungsschiene, wobei sich dabei die mittigen Drehachsen 25 (an denen sich zwei Scherenhebel 23a und 23b kreuzen) mit halber Wegkomponente in Richtung der Führungsschiene bewegen. Denn die Kluppen-nahen Gelenkachsen 24 sind ortsfest mit dem jeweiligen Kluppenkörper oder der die Kluppe tragenden Stütz- oder Tragkonstruktion 49 verbunden.

Somit dienen also die erwähnten zwischen der oberen und unteren Ebene der Scherenhebel 23a und 23b angeordneten Führungskörper 23c ebenfalls der Führung.

Wie aus der vergrößerten Detaildarstellung gemäß Figuren 3a und 3b und aus der gesamten Räumliche Darstellung gemäß Figur 2 zu ersehen ist, sind ebenfalls die über eine Scherenhebel-Konstruktion nach Art einer Gelenkkette 21 miteinander verbundenen Kluppen 19 mit Verstellführungen in Form Eckverbindungsstücken 29 gekoppelt. Dabei weisen diese Eckverbindungsstücke 29 jeweils eine Öffnung auf, in der das betreffende Eckverbindungsstück zum einen relativ zu der einen Führungsschiene 7a oder 7b und zum anderen zu der diese Führungsschiene im Bereich des Eckverbindungsstückes 29 senkrecht kreuzenden zweiten Führungsschiene 9a, 9b relativ verschiebbar geführt ist.

Mit dieser Konstruktion kann das Zusammenfahren der Kluppen 19 und während des Reckvorgangs das Auseinanderfahren der Kluppen 19 unter Beibehaltung von zwar größer werdenden aber stets gleich großen Seitenabständen zwischen jeweils zwei benachbarten Kluppen 19 auf einer Führungsschiene 7a bis 9b dadurch durchgeführt werden, dass beispielsweise die beiden ersten Führungsschienen 7a und 7b gemäß der Doppelpfeildarstellung 13 (Figur 2) unter Vergrößerung ihres Zwischenabstandes auseinandergefahren werden. Dadurch werden die entsprechenden Verstellführungen 29 in Form der erwähnten Eckverbindungen 29 durch die beiden Führungsschienen 7a, 7b mitgenommen, wodurch die auf den dazu senkrecht verlaufenden Führungsschienen 9a, 9b über den Pantograph miteinander verbundenen Kluppen 19 unter Herstellung eines zunehmend größer werdenden Zwischenabstandes zwischen den darauf sitzenden Kluppen auseinandergefahren werden. Eine derartige Verstellung kann beispielsweise verwendet werden, um eine nachfolgend noch erörterte Folie monoaxial zu recken.

Werden gleichzeitig oder zeitlich versetzt auch die senkrecht dazu verlaufenden zweiten Führungsschienen 9a, 9b gemäß der Doppelpfeildarstellung 15 auseinandergefahren, so werden dadurch gleichzeitig die auf diesen Führungsschienen geführt gehaltenen Verstellführungen/Eckverbindungen 29 über diese zweiten Führungsschienen 9a, 9b entsprechend mitgenommen, und zwar unter Vergrößerung des Abstandes zwischen den beiden Führungsschienen 9a, 9b, wodurch nunmehr auch die auf den ersten Führungsschienen 7a, 7b sitzenden Kluppen zunehmend weiter voneinander entfernt werden (Ebenfalls in gleichmäßigen Abständen). Dabei wird die erwähnte Gelenkkette 21 beim Auseinanderfahren der Führungsschiene zunehmend mehr in Öffnungsstellung verschwenkt, wodurch die Abstände zwischen allen benachbarten Paaren von Kluppen zwar größer werden, aber eben stets gleich bleiben.

Der Vollständigkeit halber soll an dieser Stelle erwähnt werden, dass natürlich die beiden ersten Führungsschienen 7a, 7b sich auf einer ersten Schienenführungsebene befinden, und die sie senkrecht kreuzenden zweiten Führungsschiene 9a, 9b zumindest in Höhe der Materialdicke der Führungsschiene in einer darunter oder darüber befindlichen zweiten Schienenführungsebene angeordnet sind. Die darauf sitzenden Kluppen sind aber in der Regel so justiert, dass die Einspannebene aller Kluppen 19, unabhängig, ob sie auf den ersten oder zweiten Führungsschienenpaar 7a, 7b oder 9a, 9b verschiebbar angeordnet sind, eine gemeinsame Einspannebene E bilden. Von daher wird vereinfacht davon gesprochen, dass die Einspannebene E der Kluppen 19 gleichzeitig auch die Verfahrebene der Kluppen 19 ist, mit anderen Worten also die Ebene E jene Ebene ist, in der letztlich alle Führungsschienen 7a, 7b und 9a, 9b angeordnet oder im Wesentlichen angeordnet sind.

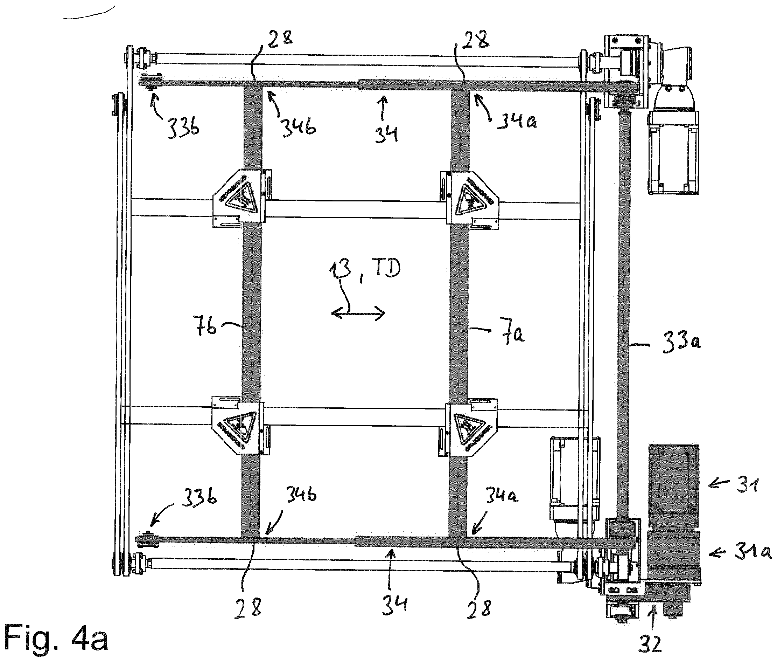

Die Verstellung der beiden ersten und der beiden zweiten Führungsschienen kann durch geeignete Antriebseinrichtungen vorgenommen werden, wie dies grundsätzlich an Hand der Figuren 4a bis 4c schematisch erläutert ist.

Dabei wird nachfolgend anhand von Figur 4a die Verstelleinrichtung für das erste Paar von Führungsschienen 7a, 7b gezeigt, die jeweils gemeinsam aufeinander zu oder voneinander weg in Transversrichtung (TD) verstellbar sind. Dabei sind die für diesen Verstellvorgang benötigten Teile dunkel in Figur 4a dunkel hervorgehoben.

Beispielsweise wird gemäß Figur 4a über einen ersten Antriebsmotor 31 und einem diesen Antriebsmotor 31 nachgeordneten Getriebe 31a sowie eine umlaufende erste Übertragungseinrichtung 32 eine erste Umlenkwelle 33a angetrieben. Diese erste Umlenkwelle 33a steht über eine weitere umlaufende zweite Übertragungseinrichtung 34 in Verbindung mit einer versetzt dazu angeordneten und parallel zur ersten Umlenkwelle 33a verlaufende zweite Umlenkwelle oder Umlenkrad 33b. Mit anderen Worten muss gegenüberliegend zur ersten Umlenkwelle 33a die gegenüberliegende Umlenkanordnung für die Übertragungseinrichtung 34 nicht als durchgängige Umlenkwelle ausgebildet sein, sondern es kann wie in Figur 4a gezeigt ist gegenüberliegend jeweils ein um eine Radachse drehendes Umlenkrad 33b ebenso angeordnet sein. Die Übertragungseinrichtung 34 selbst kann grundsätzlich nach Art einer Kette, eines Riemens, Gurtes, Spindeln etc. ausgebildet sein. Ketten werden aufgrund der spezifischen Einsatzbedingungen bevorzugt.

Die beiden Übertragungswellen 33a, 33b sind in so weitem Abstand zueinander parallel angeordnet, dass genügend Raum bis zum Erreichen einer maximalen Reckposition für die erwähnten und hierüber angetriebenen Führungsschienen 7a, 7b bereitgestellt ist.

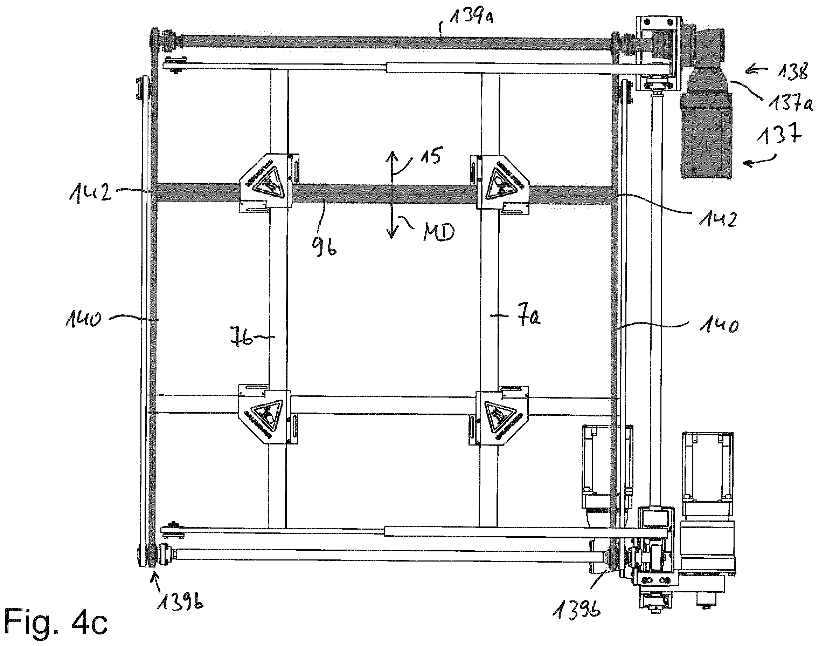

Dabei ist die eine Führungsschiene 7a am Untertrumen 34a und die andere Führungsschiene 7b der sogenannten ersten Führungsschienen 7a, 7b an dem Obertrumen 34b der zweiten Übertragungseinrichtung 34 befestigt, z.B. jeweils über einen Mitnehmer 28 (s. Figur 4c). Dies hat zur Folge, dass bei einer durch den Antriebsmotor 31 in Umlaufrichtung angetriebenen Übertragungseinrichtung 32 je nach Drehrichtung die beiden ersten Führungsschienen 7a, 7b gemäß der Doppelpfeildarstellung 13 voneinander weg oder bei umgekehrter Drehrichtung des Motors (oder eines nachgeschalteten Getriebes) aufeinander zu innerhalb des Reckrahmens 5 verfahren werden. Dabei kann die Variante gemäß Figur 4a beispielsweise als Verstellung in Querrichtung, d.h. in sogenannter Transvers-Richtung oder TD-Richtung abgekürzt benannt werden.

Eine insoweit vergleichbare Verstelleinrichtung ist auch für die beiden zweiten senkrecht zu den ersten Führungsschienen 7a, 7b verlaufenden Führungsschienen 9a, 9b vorgesehen.

Würde man allerdings einen zu Figur 4a erläuterten identischen Antrieb für die beiden weiteren Führungsschienen 9a, 9b vorsehen, so wäre nur eine symmetrische Verstellung der jeweils beiden Paare von Führungsschienen 7a, 7b und 9a, 9b gegenüber dem Zentrum nach außen hin oder aufeinander zu in Richtung des Zentrums des Reckrahmens möglich.

Um hier im Rahmen der Erfindung deutliche Vorteile zu realisieren, ist für die beiden weiteren beispielswiese in Maschinen-Längsrichtung (MD) verstellbare zweite Führungsschienen 9a und 9b eine zweite und eine dritte Antriebseinrichtung vorgesehen, um die beiden Führungsschienen 9a und 9b getrennt und zudem nicht nur aufeinander zu und voneinander weg sondern beide beispielsweise in gleicher Richtung an eine Seite des Reckrahmens heran verstellen zu können.

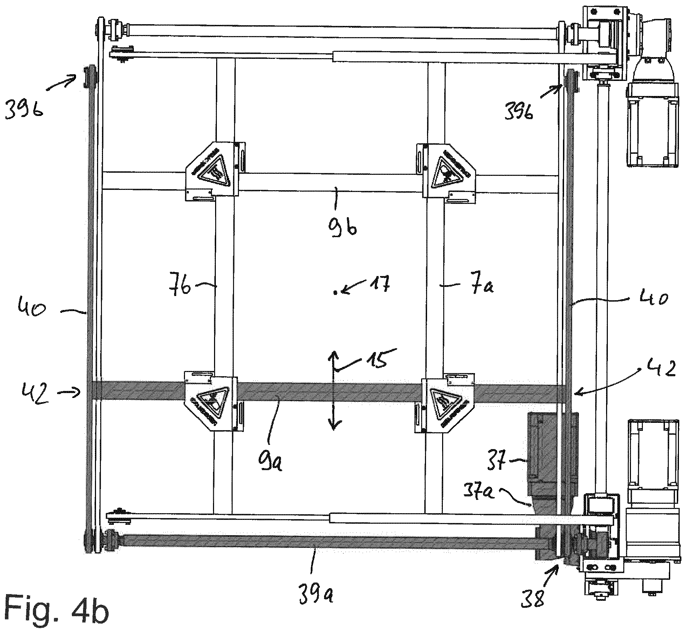

Dabei wird nachfolgend von Figur 4b zunächst die Antriebs- und Verstelleinrichtung für die eine der beiden weiteren Führungsschienen gezeigt und beschrieben, nämlich beispielsweise die Führungsschiene 9a.

Dazu ist ebenfalls wiederum ein- oder mehrstufig von einem zweiten Antriebsmotor 37 mit dem diesen Antriebsmotor 37 nachgeordneten Getriebe 37a ausgehend eine oder mehrere Übertragungseinrichtungen 38 ggf. mit einer oder mehreren Zwischenwellen oder Zwischenrädern vorgesehen, die in Rotation versetzbar sind.

Auch hier sind zwei entfernt liegende parallel zueinander verlaufend und senkrecht zu den beiden ersten Übertragungswellen 33a, 33b angeordneten zweiten Übertragungswellen 39a, 39b vorgesehen, die über eine umlaufende weitere Übertragungseinrichtung 40 miteinander in Triebverbindung stehen. Auch hier kann die Übertragungseinrichtung 40 bevorzugt aus einer Kette, einem Gurt oder Riemen einer Spindel oder dergleichen bestehen.

Dabei sind die beiden beispielsweise aus einer umlaufenden Kette bestehenden Übertragungseinrichtung 40 im Seitenabstand zueinander benachbart zum Reckrahmenrand angeordnet und werden über die durchgängige Welle 39a vom Antriebsmotor 31 kommend angetrieben. Anstelle einer zweiten Übertragungswelle können auch hier jeweils nur zwei Umlenkräder 39b vorgesehen sein, wie dies anhand von Figur 4b gezeigt ist.

Bei der schematischen Darstellung gemäß Figur 4b treibt also der Motor 37 über seine Motor- oder Ausgangswelle 37a eine nachfolgende Übertragungseinrichtung 38, eine ggf. vorgesehene Zwischenwelle 37b (z.B. parallel zur Motorausgangswelle 37a) an, um darüber z.B. die erste Übertragungswelle 39a in Rotation zu versetzen. Diese Übertragungswelle 39a steht dann über die beiden am Anfang und am Ende, also an den beiden gegenüberliegenden Stirnseitenbereichen der Übertragungswelle 39a angreifenden umlaufenden Übertragungseinrichtung 40 in Drehverbindung, die entfernt zur Übertragungswelle 39a über eine dort vorgesehene weitere Übertragungswelle 39b oder dort lediglich wie in Figur 4b gezeigt ist angeordnete Umlaufräder 39b umläuft.

Auch in diesem Ausführungsbeispiel ist die eine der beiden zweiten Führungsschienen 9a, 9b entweder an dem Untertrumen 40a oder am Obertrumen 40b der umlaufenden Übertragungseinrichtung 40 befestigt, bevorzugt wiederum über jeweils einen Mitnehmer 42, so dass bei einer Rotationsrichtung des Antriebsmotors 37 die erläuterte erste Führungsschiene 9a der beiden zweiten Führungsschienen 9a, 9b entweder in Richtung des Zentrums 17 oder von diesem Zentrum weg zum Rand des Reckrahmes verfahrbar ist, und zwar entsprechend der Doppelpfeildarstellung 15. Diese Verstellrichtung kann dann beispielsweise auch als Verstellung in Maschinenrichtung MD definiert werden.

Anhand von Figur 4c ist nunmehr eine dritte Antriebseinrichtung zur separaten Verstellung der zweiten Führungsschiene 9b des zweiten Führungsschienenpaars 9a, 9b gezeigt und beschrieben, wobei die hierfür benötigten Teile ebenfalls wieder in dunkel hervorgehoben sind.

Mit anderen Worten ist hierzu eine zweite Antriebseinrichtung 137 in Form eines Motors ggf. mit nachgeordneten Getriebe 137a oder einer nachgeordneten Übertragungseinrichtung 138 vorgesehen, worüber wiederum eine erste Übertragungswelle 139a in Rotation versetzt werden kann, und zwar je nach Motordrehrichtung in der einen oder in einer entgegengesetzten Richtung.

An den beiden gegenüberliegenden Endbereichen dieser Übertragungswelle 139a ist jeweils wiederum eine umlaufende Übertragungseinrichtung 140 vorgesehen, die ebenfalls wieder aus einer Kette, einem Gurt, einem Riemen, einer Spindel oder dergleichen bestehen kann.

Bei Rotation der Übertragungswelle 139a wird dabei also die entsprechende Übertragungseinrichtung 140 in der einen oder in einer gegensinnigen Richtung umlaufend angetrieben, wobei diese umlaufende Übertragungseinrichtung 140 am gegenüberliegenden Ende zur Übertragungswelle 139a über eine zweite dort vorgesehene Welle oder lediglich dort vorgesehene getrennt voneinander gelagerte Antriebsräder 139b umläuft.

Auch hier ist die entsprechende Führungsschiene 9b über einen Mitnehmer 142 entweder am Ober- oder am Untertrumen der umlaufenden Übertragungseinrichtung 140 befestigt, so dass letztlich bei angetriebener dritter Motor- und Antriebseinrichtung 137 abhängig von der Drehrichtung und damit von der Drehrichtung der Übertragungswelle 139a und den beiden nachfolgenden Übertragungseinrichtungen 140 die Führungsschienen 9b entsprechend der Doppelpfeildarstellung 15 entweder in Richtung Zentrum des Reckrahmens oder vom Zentrum des Reckrahmens weg im Reckrahmen verfahrbar ist.

Wichtig ist dabei, dass durch die dritte Antriebseinheit 137 die Führungsschiene 9b unabhängig von der Führungsschiene 9a verstellt werden kann. Mit anderen Worten kann die zweite und dritte Antriebseinrichtung 37, 137 so verstellt werden, dass beispielsweise auch die beiden parallel zueinander verlaufenden Führungsschienen 9a, 9b aufeinander zu verstellt werden können, unter Verringerung des Abstandes zueinander, oder weiter voneinander weg bewegt werden können, ähnlich wie die beiden Führungsschienen 7a, 7b. Durch die getrennten Antriebseinrichtungen für die beiden Führungsschienen 9a, 9b ergibt sich dann aber auch die Möglichkeit, dass beispielsweise beide parallelen Führungsschienen 9a, 9b in gleicher Richtung verstellt werden können, nicht nur unter Aufrechterhaltung ihres Abstandes zueinander, sondern auch unter Verringerung ihres Abstandes zueinander, worauf nachfolgend eingegangen wird.

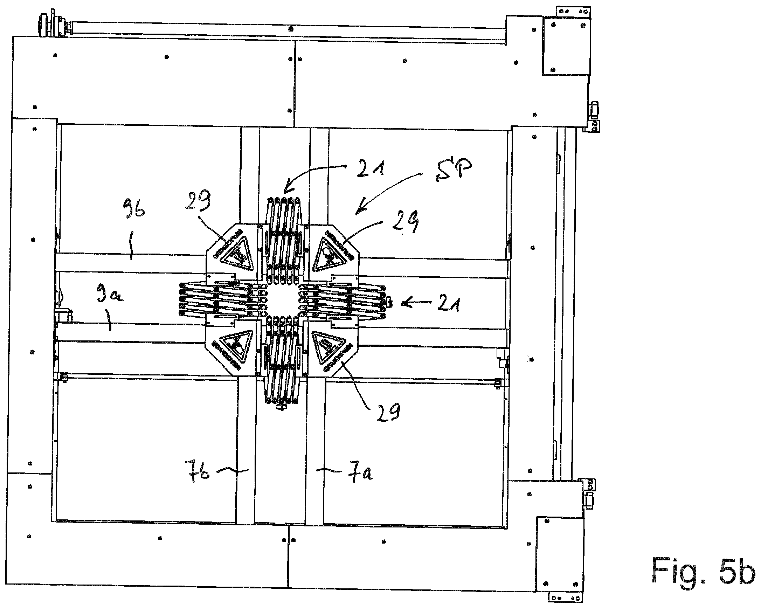

Mit einem derartigen Aufbau wäre es grundsätzlich möglich, beispielsweise bei der schematischen Draufsicht gemäß Figur 5b den Reckrahmen mit einem zu reckenden platten-, folien-, film- oder membran- oder gewebeförmigen oder -artigen Kunststoffmaterialabschnitt 41 zu bestücken (wobei nachfolgend für die erläuterten Ausführungsbeispiele häufig nur kurz von "Folienabschnitt" gesprochen wird, ohne dass hierunter eine tatsächliche Einschränkung nur auf "Folienabschnitt" gemeint ist), d.h. in einer Position, in der die ersten und zweiten Führungsschienen 7a, 7b und 9a, 9b aufeinander zu verfahren sind, bis sie in einer minimalen oder zumindest einer vergleichsweise geringen Abstandsposition zueinander angeordnet sind, und zwar vorzugsweise mittig zum gesamten Reckrahmen 5. Durch diese Verstellposition der Führungsschienen 7a bis 9b aufeinander zu werden die entsprechenden Verstellführungen/Eckverbindungen 29 entsprechend mitgenommen und in ihre aufeinander zu verfahrene Position verbracht, wobei dadurch die zwischen den Verstellführungen/Eckverbindungen 29 befindlichen Kluppen 19 über die Gelenkkette21 in ihre Ausgangsposition verstellt werden, in der der Seitenabstand zwischen zwei Kluppen 19 einen äußerst geringen oder sogar einen minimalst möglichen Abstand einnehmen. Möglich ist sogar eine Seitenberührung der einzelnen Kluppen miteinander.

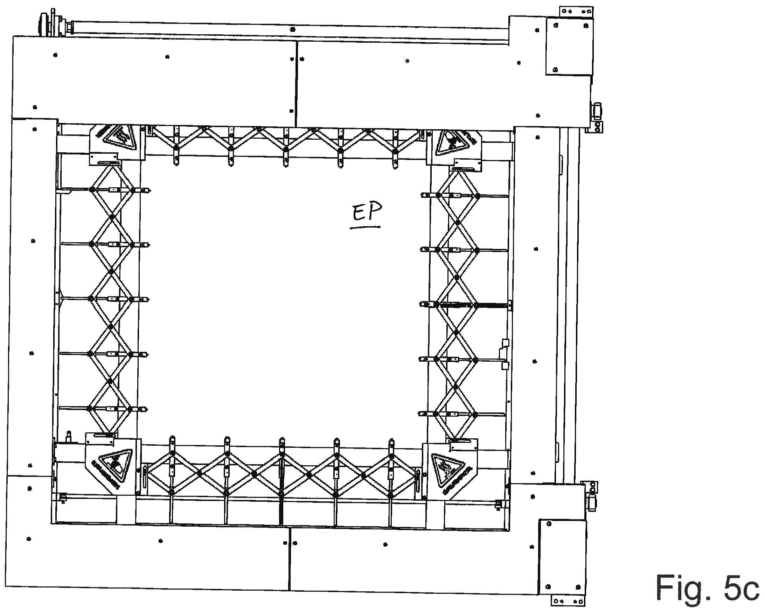

Von dieser Position ausgehend, die nachfolgend auch als Startposition SP bezeichnet wird, könnten dann die beiden ersten und die beiden zweiten Führungsschienen 7a, 7b und 9a, 9b durch die entsprechend beschriebenen Motorantriebe 31, 37 und 137 in eine zueinander entferntere Lage verfahren werden, wodurch die entsprechenden Verstellführungen/Eckverbindungen 29 gegenüber dem jeweils senkrecht zueinander verlaufenden Abschnitt der Führungsschienen mit nach außen verfahren werden und die dazwischen befindlichen Kluppen durch die Gelenkketten 21 zunehmend in voneinander entfernt liegende Positionen verstellt werden, wie dies schematisch an Hand von Figur 5c dargestellt ist. Die Position, in der der Reckvorgang beendet wird, wird insoweit nachfolgend auch als Endposition EP bezeichnet. Mit anderen Worten findet zwischen der Startposition und der Endposition der eigentliche Reckvorgang statt, auch wenn nach der Endposition noch eine Nachbehandlung (Annealing) durchgeführt werden kann, in welcher der Film beispielsweise einer gewissen Relaxation unterzogen wird und der Abstand der jeweils gegenüberliegenden Kluppen und damit der Abstand der jeweils paarweise gegenüberliegenden Führungsschienen nochmals geringfügig verringert wird. Die darüber erreichbare endgültige Lage wird insoweit auch als Nachbehandlungsposition bezeichnet. Der eigentliche Reckvorgang wird allerdings - worauf später noch eingegangen wird - unter entsprechender Wärmebehandlung in einem oder in mehreren der vorgesehenen Öfen durchgeführt.

Obgleich es sich gezeigt hat, dass eine symmetrische Reckung eines eher flächigen Kunststoffkörpers, also beispielsweise eines platten-, folien-, film- oder membran- oder gewebeförmigen oder -artigen Kunststoffmaterials wie anhand von Figur 5b zu Figur 5c beschrieben, grundsätzlich vorteilhaft ist, weist dieses Verfahren zumindest zum Zeitpunkt der Bestückung des Reckrahmens mit einem zu reckenden Kunststoffmaterialabschnitt 41 Probleme insoweit auf, als eine Bedienperson sich weit über den Reckrahmen lehnen muss, um zwischen den bevorzugt nach Art eines Quadrates umlaufend angeordneten Kluppen einen entsprechenden Folienabschnitt 41 einzufügen, bevor dieser durch Schließen der Kluppen verankert und gehalten wird.

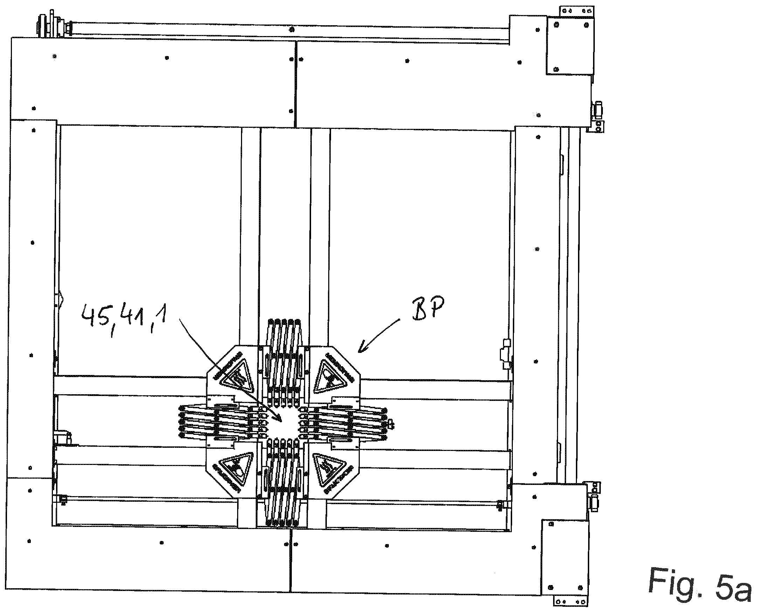

Von daher ist erfindungsgemäß vorgesehen, insbesondere vor Beginn des Reckvorgangs ausgehend von der Darstellung bevorzugt nach Figur 5b allein nur zum Bestücken des Reckrahmens 5 zumindest entweder die ersten oder die zweiten Führungsschienen in eine Bestückungsposition BP zu verfahren, wie dies an Hand von Figur 5a in schematischer Draufsicht dargestellt ist. In dieser Position kann ein zu reckender i.d.R flächiger oder plattenförmiger Kunststoffmaterialabschnitt 41 in das von den Kluppen 19 umgrenzten Bestückungsfeld 45 eingeführt werden. Danach wird der Materialrand des zu reckenden Kunststoffmaterialabschnittes 41 mittels der Kluppen fest eingespannt (Figur 5a).

Im gezeigten Ausführungsbeispiel werden also beide zweiten Führungsschienen 9a und 9b bevorzugt durch zwei getrennte Motoren 37, 137 separat angetrieben, und zwar beispielsweise ebenfalls über je eine getrennte umlaufende Übertragungseinrichtung 40 bzw. 140.

Dadurch wird eine bessere Ergonomie erzielt. Der Vorteil liegt darin, dass beispielsweise die auch als Längsreck-Führungsschienen oder kurz als MD-Führungsschienen 9a, 9b bezeichneten Führungsschienen weiter nach vorne in der gesamten Anlage verstellt und dort positioniert werden können, um dann in dieser Position wie erläutert die Bestückung mit einem zu reckenden Kunststoffmaterialabschnitt 41 vorzunehmen. Wie erwähnt wird also die gemeinsame Verstellung in eine Richtung für beide Führungsschienen 9a, 9b mit Hilfe von zwei einzeln steuerbaren Motoren 37 und 137umgesetzt. Für eine gleichmäßige Kraftübertragung können dabei die Antriebsstränge möglichst gleich ausgelegt sein. Mit anderen Worten können die beiden Motorengetriebe 37a und 137a sowie die zugehörigen Antriebsstränge 37 und 137 nur noch für die halbe benötigte Kraft oder Leistung ausgelegt sein, da sie jeweils nur eine Führungsschiene verstellen müssen, über die die entsprechenden Reckkräfte auf die zu reckenden Kunststoffmaterialabschnitte eingeleitet werden müssen. Der ferner vorgesehene Antriebsstrang für die beiden senkrecht dazu verlaufenden Führungsschienen 7a und 7b, die nur gemeinsam aufeinander zu oder während des Reckvorganges voneinander weg verfahren werden können, benötigen demgegenüber wie herkömmliche Antriebseinrichtungen auch einen stärkeren Motor, der darauf ausgelegt ist, dass er die auf beide Führungsschienen einwirkenden gegensinnigen Reckkräfte erzeugen kann. Anstelle dessen oder teilweise ergänzend zu einem stärkeren Motor kann auch ein Getriebe mit einer anderen Übersetzung gewählt werden. Durch die Verwendung zweier getrennter Antriebseinrichtungen für die beiden separat verfahrbaren Führungsschienen 9a und 9b ergibt sich zum einen eine bessere Gewichtsverteilung und möglicherweise geringere Gesamtbelastung beispielsweise auf die Lager.

Welche der beiden Führungsschienenpaarungen gleichzeitig in einer Richtung verstellbar sind, ist grundsätzlich egal. Es ist ausreichend, wenn zum Bestücken die Kluppen 19 in aufeinander zu verfahrener Position möglichst benachbart zu einem Randabschnitt des Reckrahmens 5 positioniert werden können, so dass eine entsprechende Verstellbewegung der beiden anderen Führungsschienen 9a, 9b in einer gemeinsamen Richtung nicht notwendig ist (obgleich dies vorgesehen sein kann).

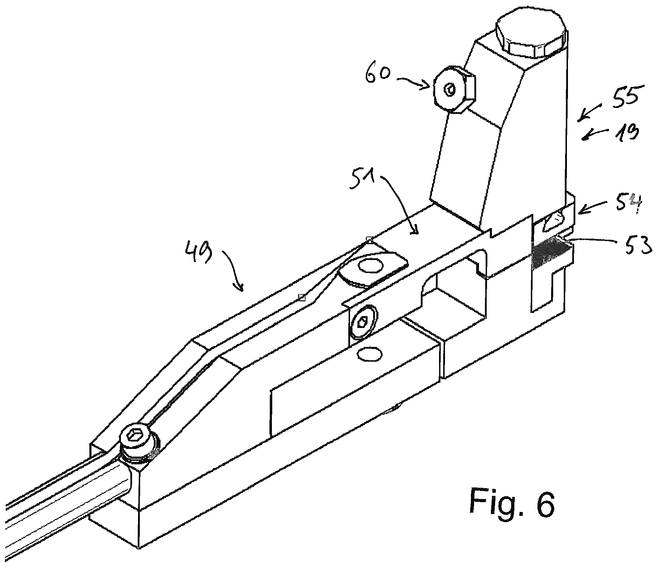

Aus dem Vergleich der Bestückungsposition BP gemäß Figur 5a und der in der Regel die Startposition SP vor Beginn des Reckvorganges darstellenden Mittenposition gemäß Figur 5b ist also zu entnehmen, dass das durch die diversen Kluppen 19 begrenzte Bestückungsfeld 45 (wenn es die so genannte Bestückungsposition BP einnimmt) soweit aus dem Zentrum 17 zu einer Außenrandbegrenzung 5b des Reckrahmens 5 verschoben sein kann, dass sich das Folienfeld 45 in seiner Bestückungsposition BP mit dem Bestückungsfeld 45 bei Einnahme der Startposition SP nicht überlappt oder nur geringfügig überlappt, oder wie im gezeigten Ausführungsbeispiel nach Figur 6a und 6b sogar im Abstand zueinander zu liegen kommt (Figuren 5a und 5b) .

Aus dem Vorstehenden ist zu entnehmen, dass das Bestückungsfeld 45 oder der darin zu verbringende Folienabschnitt 41 in der Bestückungsposition BP vor Durchführung des Reckverfahrens in Draufsicht auf die Reckanlage eine Position einnimmt und/oder eine Fläche überdeckt, die überlappungsfrei zur Fläche des Folienabschnittes 41 in der Startposition SP liegt oder sich nur in eine Teilfläche überlappen, die weniger als 80 %, insbesondere weniger als 70 %, 60 %, 50 %, 40 %, 30 %, 20 % oder weniger als 10 % der Fläche eines zu reckenden Kunststoffmaterialabschnittes 41 vor Durchführung des Reckvorganges beträgt.

Ob und wie umfassend sich ein zu reckender Kunststoffmaterialabschnitt in seiner Bestückungsposition BP flächenmäßig mit dem gleichen Kunststoffmaterialabschnitt überlappen würde, wenn dieser Kunststoffmaterialabschnitt von seiner Bestückungsposition BP in seine Startposition SP verfahren worden ist, hängt auch von der Größe des Folienmusters, d.h. von der Größe des Kunststoffmaterialabschnittes ab. Entsprechende Kunststoffmaterialabschnitte können beispielsweise variieren von 2 cm x 2 cm bis beispielsweise 20 cm x 20 cm. Mit anderen Worten kann also das betreffende Muster eines Kunststoffmaterialabschnittes, welches gereckt werden soll, Kantenlängen aufweisen, die beispielsweise eine minimale Kantenlänge von 2 cm, 3 cm, 4 cm, 5 cm, 6 cm, 7 cm, 8 cm, 9 cm, 10 cm, 11 cm, 12 cm, 13 cm, 14 cm, 15 cm, 16 cm, 17 cm, 18 cm oder von 19 cm aufweisen oder umgekehrt eine maximale Kantenlänge von 2cm, 3 cm, 4 cm, 5 cm, 6 cm, 7 cm, 8 cm, 9 cm, 10 cm, 11 cm, 12 cm, 13 cm, 14 cm, 15 cm, 16 cm, 17 cm, 18 cm oder 19 cm oder 20 cm aufweisen.

Wird eine ungerade Anzahl von Kluppen auf jeder Führungsschiene 7a bis 9b verwendet, so bleibt die auf jeder Führungsschiene in der Mitte sitzende Kluppe 19, 19a in Längsrichtung der jeweiligen Führungsschiene größtenteils unbeweglich (Figur 3a, 3b und 5c), obgleich sie grundsätzlich verschiebbar auf der jeweiligen Führungsschiene angeordnet ist. Denn die jeweiligen Führungsschienen bewegen sich während des Reckprozesses paarweise symmetrisch zum Mittelpunkt/Zentrum 17 voneinander weg, so dass die jeweils mittlere Kluppe 19a auf der Führungsschiene ihre Position größtenteils so beibehält, dass sie auf das Zentrum 17 ausgerichtet ist.

Abweichend von der eben erwähnten Ausgestaltung unter Verwendung einer ungeraden Anzahl von Kluppen ist es aber grundsätzlich genauso möglich, auch eine gerade Anzahl von Kluppen auf jeder Führungsschiene zu verwenden. Dann würden die beiden mittleren Kluppen sich bim Auseinanderfahren der einzelnen Kluppen ebenfalls um eine gewisse Weglänge längs der Führungsschiene bewegen. Idealerweise werden fünf bis sieben Kluppen pro Führungsschiene verwendet. Gleichwohl kann aber von diesen Vorgaben abgewichen werden. Obgleich auch weniger Kluppen möglich wären, wären dann bevorzugt fünf bis 10 Kluppen pro Führungsschiene eingesetzt.

Wie erwähnt ist bevorzugt vorgesehen, auf jeder Führungsschiene fünf oder sieben Kluppen vorzusehen, wobei dann die maximale mechanische Belastung beispielsweise bei 2000 N/Achse, also pro Führungsschiene liegen kann. D.h., dass entweder 400 N/Kluppe (bei fünf Kluppen) oder 285 N/Kluppe (bei sieben Kluppen) Belastung aufzunehmen ist. Dabei kann das maximale Reckverhältnis beispielsweise 1 : 10,4 und die Reckgeschwindigkeit beispielsweise stufenlos zwischen 1 - 500 mm/sec einstellbar sein. Aber auch diese Werte können entsprechend variieren.

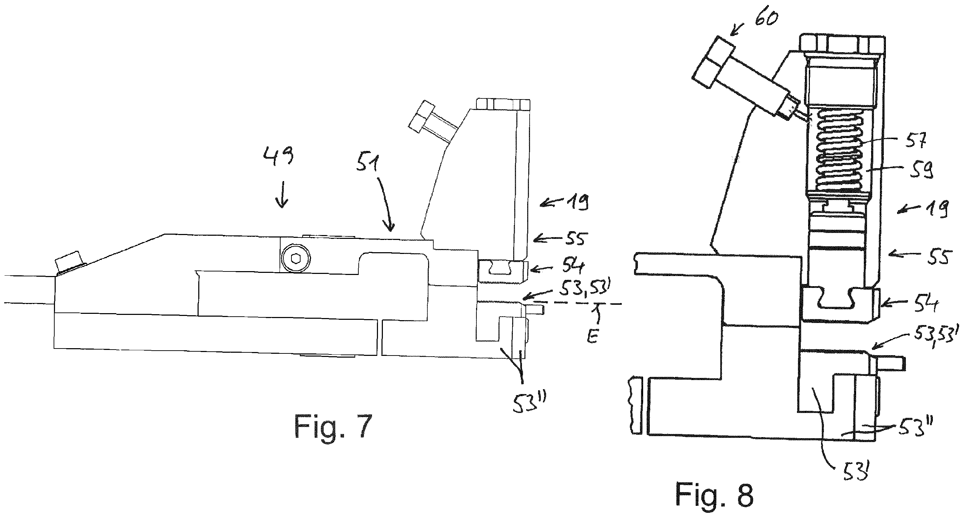

An Hand von Figur 6 ist einmal in leicht perspektivischer Seitenansicht und in Figur 7 in einer exakten Seitenansicht eine Kluppe 19 mit zugehöriger Stütz- und Tragkonstruktion 49 im schematischen Aufbau gezeigt, hier beispielsweise mit einer zusätzlich vorgesehenen Kraftmesseinrichtung 51. Diese Kraftmesseinrichtung 51 ist aber nicht zwingend notwendig, was bedeutet, dass auf den Führungsschienen Kluppen mit und ohne Kraftmesseinrichtung 51 geben kann.

Die Kluppeneinrichtung selbst umfasst üblicherweise einen Kluppenkörper oder allgemein eine Kluppe 19 mit einer in der Regel unten liegenden ersten Klemmbacke 53, deren Kontaktfläche nach oben weist, und eine zweite obere Klemmbacke 54, deren Berührungs- und Kontaktfläche nach unten weist. Diese zweite oder obere Klemmbacke 54 ist an der Unterseite der Kluppeneinklemmeinrichtung 55 bevorzugt auswechselbar befestigt, so dass die zweite oder obere Klemmbacke 54 in Richtung auf die untere Klemmbacke 53 zu verfahren werden kann (und/oder verschwenkbar ist), um in Klemmstellung den entsprechenden Rand eines zu reckenden Materialabschnitts festzuhalten und einzuklemmen.

Wie aus der Darstellung gemäß den Figuren 6, 7 und der vergrößerten Detaildarstellung gemäß Figur 8 schematisch zu ersehen ist, ist die jeweilige Kluppeneinklemmeinrichtung 55 durch eine Federkrafteinrichtung 57 in Öffnungsstellung kraftbeaufschlagt, so dass beim Ausbleiben einer Gegenkraft der Rand des zu reckenden Kunststoffmaterialabschnittes freigegeben wird.

Zur Durchführung des Klemmvorganges wird ein entsprechender Kolbenraum 59 mit einem Druckmedium druckbeaufschlagt, wobei der Druck des Druckmediums so groß ist, dass die Kluppeneinklemmeinrichtung 55 entgegen der Kraft der erwähnten Federeinrichtung 57 von seiner angehobenen Freigabestellung in seine abgesenkte Klemmstellung verfahren wird. Wird der Kolbenraum wieder belüftet oder druckentlastet, wird durch die erwähnte Federkrafteinrichtung 57 die Kluppeneinklemmeinrichtung wieder in Freigabeposition angehoben. Der entsprechende Leitungsanschluss 60 zu einer Druckmedium-Leitung zur Druckbeaufschlagung des Kolbenraums 59 ist in Figur 8 eingezeichnet. Grundsätzlich vorgesehene Druckleitungen oder Druckluft- oder Stickstoffleitungen führen zu allen Kluppenkörpern, beispielsweise zu dem in Figur 8 gezeigten Leitungsanschluss 60. Druckleitungen 63 sind in Figur 6, 7 und 8 nicht dargestellt, wohl aber z.B. in Figur 3b.

Ferner ist aus den Darstellungen gemäß Figur 6 und 7 auch zu ersehen, dass der gesamte Kluppenkörper mit der Kluppeneinklemmeinrichtung 55 und der ersten oder unteren Klemmbacke 53 über die Stütz- und Trageinrichtung 49 gehalten ist, die letztlich mit dem Scherengitter 21 verbunden und darüber geführt ist.

Die Kluppentrageinrichtung 49 ist dabei über den Abschnitt, der die Kraftmesseinrichtung 51 aufnimmt, mit der eigentlichen Kluppenanordnung verbunden (also mit der unteren oder ersten Klemmbacke 53, der Kluppe mit der Kluppeneinklemmeinrichtung 55 und der daran befestigten oberen oder zweiten Klemmbacke 54). Die Kraftmesseinrichtung 51 kann dabei auch einen Biegemessstreifen BMS, einen Dehnungsmessstreifen oder beispielsweise einen Lichtwellenleiter LWL umfassen oder daraus gebildet sein. Einschränkungen auf bestimmte Messsysteme bestehen nicht. Mit anderen Worten können alle geeigneten Messsysteme verwendet werden. Die Ausrichtung der erwähnten Kraftmesseinrichtung 51 insbesondere in Form eines Biegemessstreifens, eines Dehnungsmessstreifens oder eines Lichtwellenleiters ist dabei bevorzugt parallel oder in einem Winkel angeordnet, der kleiner als 90° ist, insbesondere kleiner als 80°, 75°, 70°, 65°, 60°, 55°, 50°, 45°, 40°, 35°, 30°, 25°, 20°, 15°, 10° und kleiner als 5° gegenüber der Ebene E (Fig. 7) des zu reckenden Folienabschnittes ausgerichtet, also bevorzugt mehr oder weniger parallel oder im Wesentlichen parallel zur Ebene E des zur reckenden Folienabschnittes, wodurch relativ genaue Messwerte ermittelt werden können. Aus der Seitendarstellung gemäß Figur 8 ist dabei zu ersehen, dass ein unterer Abschnitt der Stütz- und Trageeinrichtung 49 für die Kluppe 19 durch einen Spalt getrennt ist, so dass der gesamte Abstützung zur Erzielung einer hohen Messgenauigkeit nur über die Kraftmesseinrichtung 51 erfolgt.

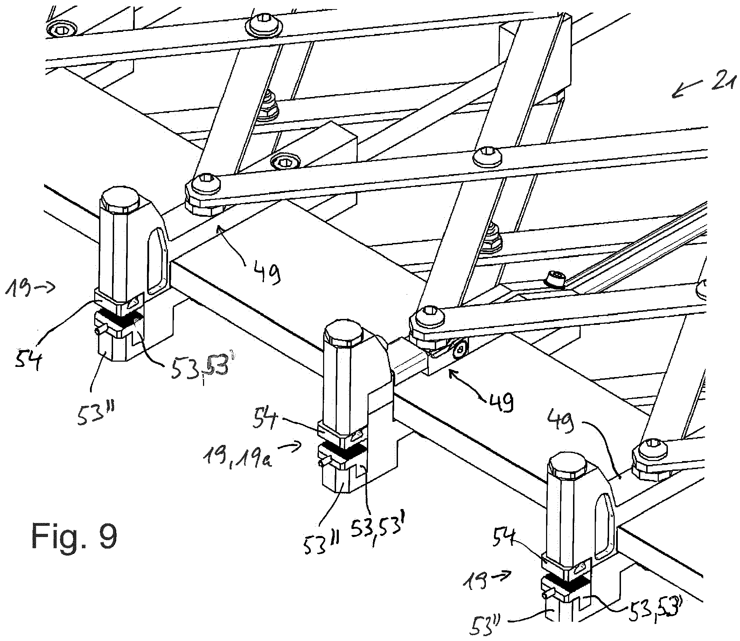

Nachfolgend wird in Ergänzung auch noch auf Figur 9 verwiesen, die eine räumliche Darstellung eines Ausschnitts einer Führungsschiene 7a, 7b oder 9a, 9b mit einem verbleibenden geringen Ausschnitt der Gelenkkette 21 und vor allem der an den Führungsschienen positionierten Kluppen zeigt.

Bei der Darstellung aus Figur 9 ist auch zu ersehen, dass sich die bevorzugt in der Mitte angeordnete Kluppe 19a bezüglich ihrer Stütz- und Tragkonstruktion 49 von der Stütz- und Tragkonstruktion 49 der anderen Kluppen und Kluppenkörper 19 unterscheidet, weil die erwähnte Kraftmesseinrichtung bevorzugt nur im Bereich der mittleren Kluppe 19a vorgesehen bzw. ausgebildet ist, und die bezüglich einer Führungsschiene 7a, 7b oder 9a, 9b vorgesehenen aus der Mitte heraus seitlich versetzt liegende Kluppenkörper 19 keine weiteren Kraftmesseinrichtungen notwendig sind.

Abweichend von dem erläuterten Ausführungsbeispiel kann die erwähnte Kraftmesseinrichtung unabhängig von ihrer Ausgestaltung und Art natürlich auch bei mehreren und/oder an anderen Positionen bzw. bei anderen Kluppen alternativ oder ergänzend vorgesehen sein. Ferner wäre es auch denkbar, dass beispielsweise nur eine einzige oder beispielsweise nur zwei Kluppen mit einer entsprechenden Kraftmesseinrichtung im Gesamtsystem vorgesehen sind.

Schließlich wird an dieser Stelle auch schon angemerkt, dass zur Verbesserung der Einspannwirkung zwischen dem Klemmabschnitt der Kluppeneinklemmeinrichtung 55 und dem Kluppentisch die entsprechenden Anpress- und Klemmflächen des Anpressabschnittes der Kluppeneinklemmeinrichtung 55 und der Auflagefläche des Kluppentisches unterschiedlich ausgebildet sein können. Anhand von Figur 8, 9 ist bereits ersichtlich, dass beispielsweise an der Unterseite der in der Höhe verstellbaren Kluppeneinklemmeinrichtung55 die erwähnte obere oder zweite Klemmbacke 54 auswechselbar montiert werden kann. Dies erfolgt bevorzugt über eine Form und/oder Kraftschlussverbindung. Im gezeigten Ausführungsbeispiel ist eine entsprechende Klemmbacke 54 zur Anbringung an der Unterseite einer Kluppeneinklemmeinrichtung 55 mit einer nutförmigen Ausnehmung 81 versehen, die an den beiden gegenüberliegenden Längsseiten eine Hinterschneidung 83 aufweist, in die ein entsprechender Abschnitt der Unterseite der Kluppeneinklemmeinrichtung 55 eingreifen kann.

Die Ausbildung der diversen oberen Klemmbacken oder Kluppenkontaktabschnitte 54 , die mit der Kluppeneinklemmeinrichtung 55 auf die unteren Klemmbacken 53 zu oder von diesem weg verfahren werden können, ist nachfolgend anhand einiger Figuren kurz erläutert.

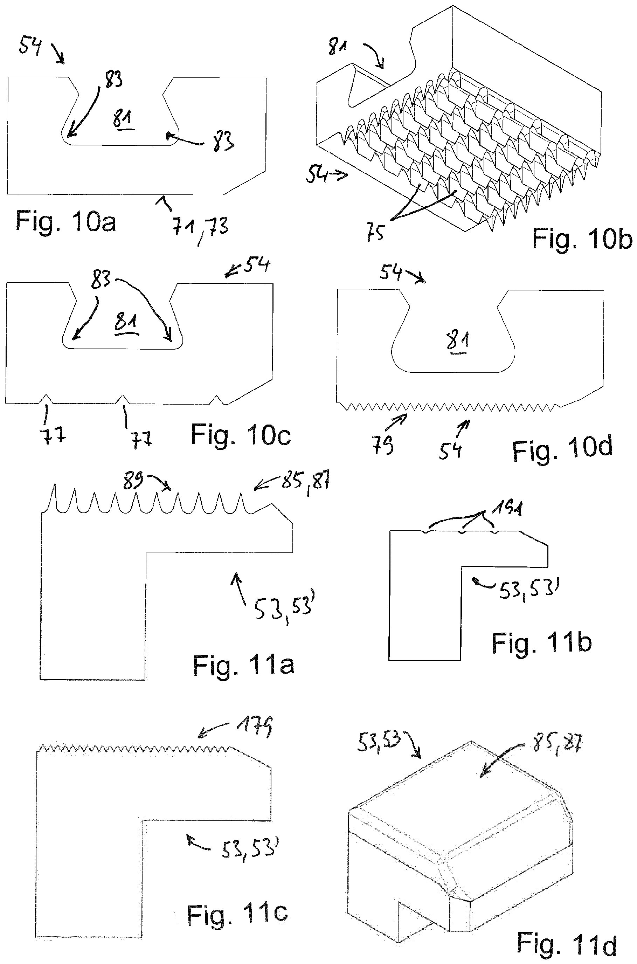

Anhand der Figuren 10a bis 10d sind im schematischen Querschnitt unterschiedliche Beispiele für die nach unten weisende Kontaktseite oder Kontaktfläche 71 der oberen Klemmbacken 54 gezeigt. Daraus ist zu ersehen, dass die eigentliche Klemm- oder Kontaktfläche 71, mit der am Rand ein eher flächiger Kunststoffkörper sandwichartig in Zusammenwirkung mit der unteren Klemmbacke 53 festgeklemmt wird, beispielsweise auch materialabhängig aus einer mehr oder weniger glatten Fläche oder zumindest geringfügig ziselierten oder aufgerauten Klemmfläche 73 bestehen kann (Figur 10a) oder eine Vielzahl von nach unten vorragenden Klemmzähnen oder Klemmzungen 75 aufweisen kann (Figur 10b). Ebenso möglich ist die Ausbildung von beabstandet zueinander parallel verlaufenden oder sich schneidenden Rillen 77, die beispielsweise V-förmig im Querschnitt ausgestaltet sein können (Figur 10c). Möglich ist auch die Ausbildung einer Vielzahl von Klemmrippen 79, die in Parallelrichtung zueinander verlaufen, vorzugsweise parallel zum entsprechenden Folienrand des zu klemmenden Folienabschnittes (Figur 10d).

Aus den erläuterten schematischen im Querschnitt wiedergegebenen Darstellungen nach Figur 10a bis 10d ist auch die nutförmige Ausnehmung 81 zu ersehen, welche wie hier beispielsweise dargestellt mit seitlichen Hinterschneidungen 83 versehen ist, um so bei einer entsprechend komplementär geformten Unterseite der Kluppeneinklemmeinrichtung 55 auf diese Kluppeneinklemmeinrichtung 55 auswechselbar aufgesteckt werden zu können. Wie insbesondere aus Figur 8 zu ersehen ist, ist innerhalb des Kluppenkörpers 19 ein freier Verstellweg für die Kluppeneinklemmeinrichtung 55 vorgesehen, die zylinderförmig gestaltet ist, wobei sich diese Zylinder in dem Hohlraum in einem Kluppenkörper 19 längs eines Verstellweges verstellen kann, und zwar mit dem erwähnten Druckmedium entgegen der Federeinrichtung 57. Der Kluppenkörper mit der erwähnten Kluppeneinklemmeinrichtung 55 ist also insoweit kolbenförmig oder kolbenartig ausgestaltet, wobei an der Unterseite des Verstellzylinders (Kolbens) die entsprechenden Klemmbacken auswechselbar angebracht werden können. Es ist natürlich auch möglich, dass andere Geometrien anwendbar sind, um die erwähnten Kluppenkontaktabschnitte zu montieren, insbesondere an- oder aufzustecken etc.. Bevorzugt ist eine leicht auswechselbare Verbindung der auswechselbaren Kluppenkontaktabschnitte vorgesehen, die dann je nach Einsatzzweck ausgewechselt und montiert werden können.

Durch die unterschiedliche Ausbildung der unterschiedlichen Klemmflächen 73 kann eine optimale Anpassung an unterschiedliche zu reckende Kunststoffmaterialabschnitte vorgenommen werden, und zwar in Abhängigkeit von der Dicke des zu reckenden Kunststoffmaterials und/oder der Materialzusammensetzung des zu reckenden Kunststoffmaterials. Dabei können die unterschiedlichen Kluppenkontaktabschnitte 65 jeweils gewählt werden, die bezüglich des zu reckenden Kunststoffmaterials eine optimale Fixierung auf den Kluppentisch ermöglichen. Die gezeigten beispielhaften Ausgestaltungen der unterschiedlichen Kluppenkontaktabschnitte können dabei zum Einsatz kommen, je nachdem, welches Kunststoffmaterial gereckt werden soll, beispielsweise eher ein plattenförmiges Kunststoffmaterial oder ein eher folien-, film- oder membranförmiges oder -ähnliches Material oder beispielsweise auch ein Gewebematerial gereckt werden soll.

Ebenso kann die in der Regel nach oben weisende Klemmseite 85 auf der Oberseite der unteren Klemmbacken 53 eine Klemmfläche 87 aufweisen, die entsprechend gestaltet sein kann, also beispielsweise wieder eine Vielzahl von nach oben vorragenden Zähnen oder Rippen 89 aufweisen kann (Figur 11a) oder eine Vielzahl von in Parallelrichtung zueinander verlaufenden beispielsweise im Querschnitt V-förmigen Nuten oder Rillen 191 (Fig. 11b). Diese können vorzugsweise parallel zum Klemmrand des zu klemmenden Folienabschnitts verlaufen, oder aber um 90° versetzt. Des Weiteren ist denkbar, dass die V-förmigen Nuten oder Rillen 191 ein Grid-Muster darstellen. Dies ist in Figur 11b gezeigt. Möglich ist auch die Verwendung einer Vielzahl von Klemmrillen 179, ebenfalls wieder bevorzugt parallel zum Folienrand, wie anhand von Figur 11c gezeigt ist.

Figur 11d zeigt eine Variante mit einer gummierten Klemmfläche 87 bzw. obere Klemmseite 85.

Die gezeigten Varianten stellen nur Beispiele dar. Es gibt eine beliebige Anzahl von Abwandlungen hiervon, die für die verschiedensten Kunststoffmaterialien und Kunststoffdicken geeignet sein können.

Die erwähnten unteren Klemmbacken 53 sind bevorzugt in Form von auswechselbaren Kluppentisch-Anbauelementen 53' ausgebildet. Dies hat den Vorteil, dass diese Kluppentisch-Anbauelemente 53' auswechselbar auf einem Kluppentisch-Unterbau 53" montierbar sind, um eine optimale Anpassung an die zu reckenden Folienabschnitte zur Erzielung eines besonders guten Klemmeingriffes vornehmen zu können. Dies ist insbesondere aus Figur 9 zu ersehen, wo die anhand der Figuren 11a bis 11d beispielhaft gezeigten unteren Klemmbacken 53 in Form der auswechselbaren Klemmbacken-Anbauelemente 53' auf einen in Figur 9 sichtbaren Klemmbacken-Unterbau 53" eingesetzt oder montiert sind.

Anhand der vorausgegangenen Figuren ist der grundsätzliche Aufbau und die grundsätzliche Wirkungsweise des Reckrahmens erläutert worden.

Die bevorzugte symmetrische Reckung eines Folienabschnittes ausgehend von der aufeinander zu verfahrenen Position der Kluppen gemäß Figur 5b (Startposition SP) zu der so genannten Endposition EP gemäß Figur 5c, in der die Kluppen einen maximalen oder größeren Abstand zueinander einnehmen, wird nicht in der Bestückungs- oder Entnahmezone 1 (Figur 1) durchgeführt, sondern bevorzugt in einem ersten Ofen 3a, in welchem der zu reckende Folienabschnitt üblicherweise auf eine entsprechende Temperatur aufgeheizt werden kann. Allerdings ist es durchaus auch möglich, dass das zu reckende Material kalt, d.h. beispielsweise bei Raumtemperatur verstreckt werden soll.

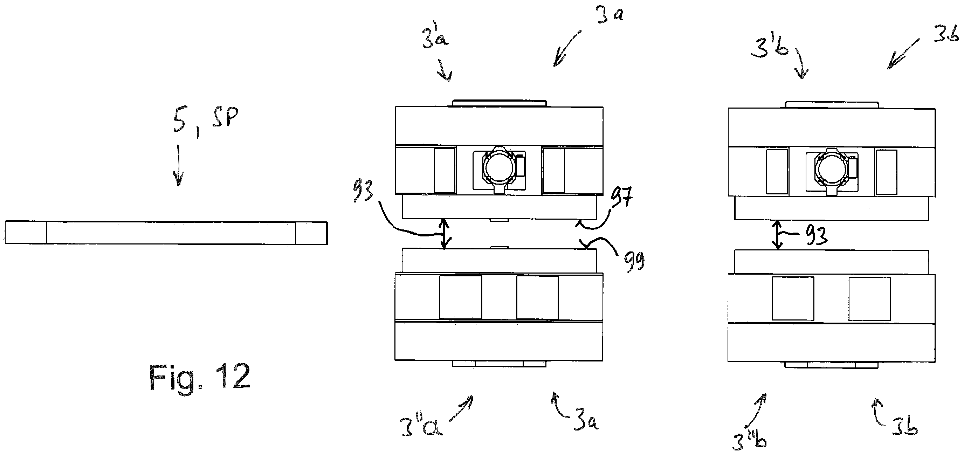

Anhand von Figur 12 ist dabei in schematischer Darstellung eine Ofenkonstruktion oder Ofenanordnung gezeigt, um besonders gute Reckergebnisse zu erzielen. Die Darstellung gemäß Figur 12 zeigt dabei eine erste und zweite Ofenanordnung 3a bzw. 3b, und zwar jeweils mit einem oberhalb des Reckrahmens vorgesehenen Ofen 3'a bzw. 3'b und einem weiteren unterhalb der Reckrahmenebene vorgesehenen Ofen 3'b bzw. 3"b.

Zwischen der Unterseite 97 der oberen Öfen und der Oberseite 99 der unteren Öfen ist ein ausreichender vertikaler Abstandsraum 93 vorgesehen, der ausreichend ist, dass der Reckrahmen 5 auf den Führungsschienen, den darauf sitzenden Kluppen, den Druckleitungen und allen Anbauteilen zwischen den jeweils oberen und unteren Öfen verfahren werden kann.

In Figur 12 ist dabei die Anordnung gezeigt, in der sich der Reckrahmen 5 noch außerhalb der Öfen in seiner Startposition SP (bzw. Bestückungs-/Entnahmeposition) befindet. Aus der Darstellung ist auch zu entnehmen, dass jeweils der obere Ofen mit einem unteren Ofen mehr oder weniger Deckungsgleich angeordnet ist.

Durch diese Ofenanordnung kann üblicherweise eine entsprechende Temperierung des zu reckenden Folienabschnittes vorgenommen werden. Bevorzugt erfolgt die Temperierung nicht durch Infrarotstrahlung (was bedeuten würde, dass der zu reckende Folienabschnitt erst nach Einfahren in den Ofen entsprechend aufgeheizt werden kann), sondern durch Zuführung von beheizter Luft, die schon vor dem Einführen des Reckrahmens mit dem zur reckenden Folienabschnitt auf eine entsprechende Temperatur gebracht worden ist.

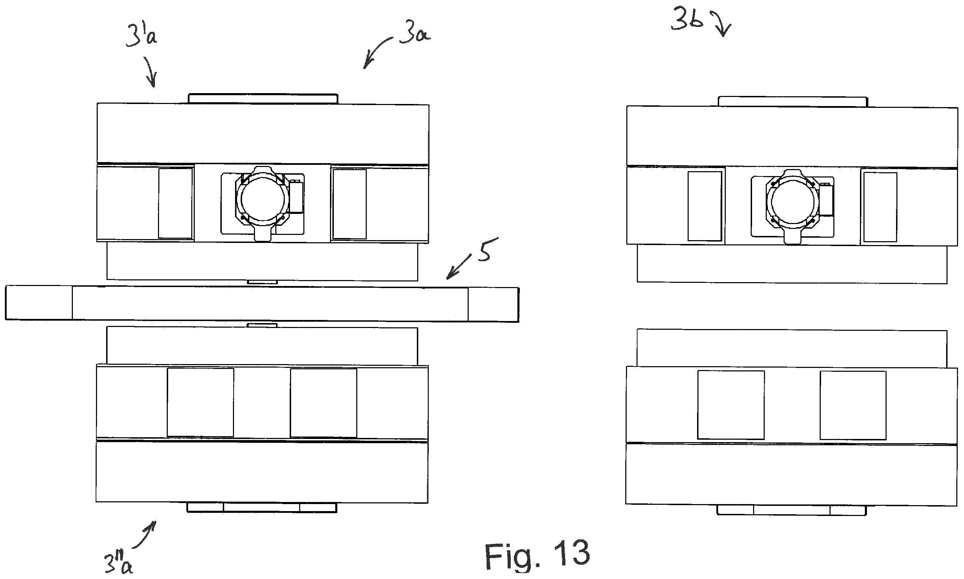

Anhand von Figur 13 ist dabei eine entsprechende Darstellung zu Figur 12 gezeigt, bei welcher sich der Reckrahmen 5 mit einem zu reckenden Materialabschnitt 41 bereits in der ersten Ofenanordnung 3a zwischen dem ersten oberen und unteren Ofen 3'a, 3"abefindet. In dieser Stellung würde üblicherweise der Reckvorgang ausgehend von der Startposition SP bis zur Endposition EP durchgeführt werden.

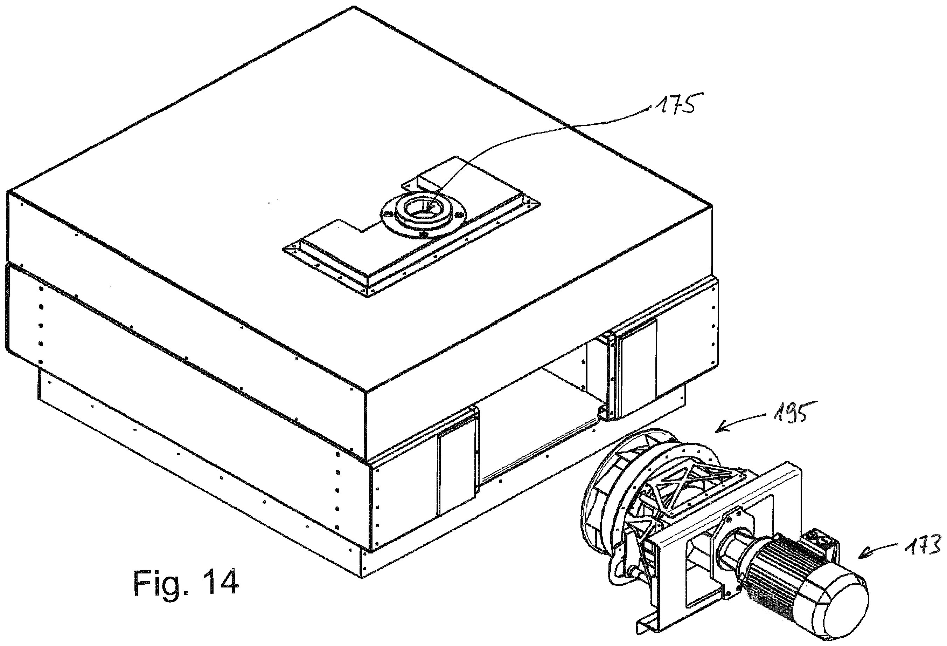

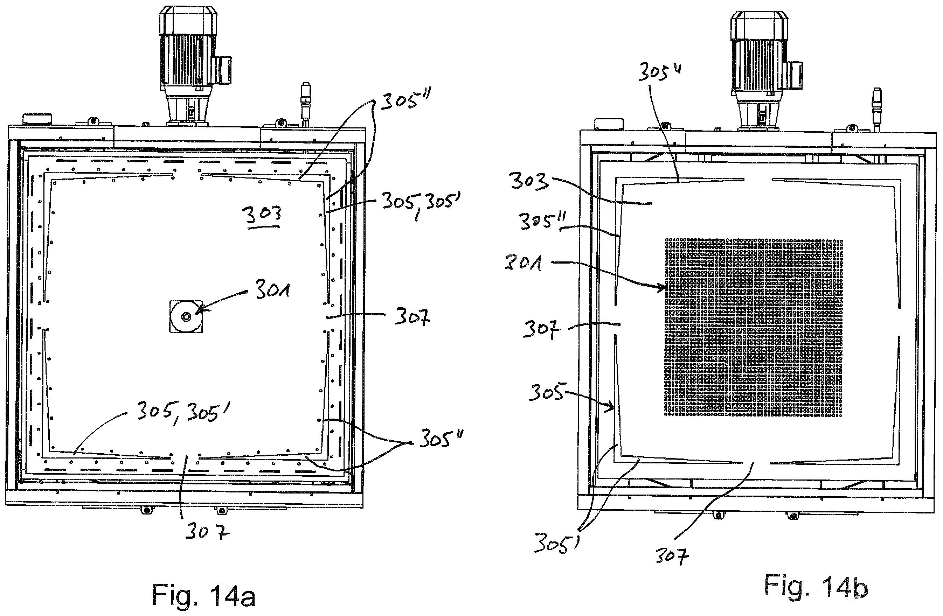

Bezüglich der Ofenanordnung kann ferner noch unter Bezugnahme auf Figur 14 entnommen werden, dass zumindest an einer Seite eines Ofens (z.B. im Ofen 3'a oder 3'b) auch ein Ventilator oder ein Ventilatorrad 195 innerhalb eines Ofenraumes angeordnet sein kann, der bzw. die durch einen außenliegenden Motor 173 bevorzugt direkt angetrieben wird, in dem die Ventilatorwelle mit der Motorwelle direkt gekoppelt ist oder direkt auf der Motorwelle sitzt. Es wird also bevorzugt ein so gebildeter Direktantrieb realisiert. Dabei sind in Figur 14 der Ventilator, der Direktantrieb und der Motor selbst in ausgebauter Position gezeigt, bevor er in einer entsprechenden Seitenwand des Ofens eingesetzt wird. Für die Luftzufuhr sorgt eine Öffnung 175. Diees kann nicht nur in den oberen Öfen 3'a, 3'b usw. sondern alternativ oder ergänzend auch in den jeweils unteren Öfen 3"a, 3"b usw. verbaut sein.

Ansonsten kann auch eine passive Luftzufuhr vorgesehen sein, die aber weniger vorteilhaft ist als eine aktive Luftzufuhr entsprechend dem vorstehend erläuterten Direktantrieb. An der erwähnten Öffnung kann aber grundsätzlich eine aktive oder eine passive Luftzufuhr für den Ofen angebracht werden. Prinzipiell benötigt der Ofen eine Zusatzluftzufuhr, da er die vorhandene Luft im Umluftbetrieb umwälzt.

In Ergänzung zu Figur 14 wird auch noch auf die weiteren Figuren 14a und 14b verwiesen, wobei in Figur 14a eine untere Direktansicht beispielsweise eines ersten Ofens, d.h. beispielsweise ersten oberen Ofens 3'a (oder eine Draufsicht auf einen untern Ofen 3"a) und Figur 14b eine entsprechende Unterseitenansicht auf einen zweiten oder dritten Ofen, beispielsweise ein Ofen 3'b oder eine Draufsicht auf den zugehörigen unteren Ofen 3"b wiedergibt, wie er beispielsweise für den Annealing-Bereich zum Einsatz kommen kann.

Bei der Darstellung gemäß Figur 14a bezüglich eines Reckofens ist eine zentrale Ausblasöffnung 301 in einer Bodenabdeckung 303 eine fokussierte Ausblasung beispielsweise von Luft auf den darunter im Reckrahmen befindliche zu reckenden Kunststoffmaterialabschnitt 41 durchgeführt werden kann, wobei dazu die Öffnung, Dimensionierung und Anordnung der Ausblasöffnung 301 auf die Größe und Lage des zu reckenden Kunststoffmaterialabschnittes abgestimmt ist. Mit anderen Worten die Ausblasöffnung 301 in Draufsicht zumindest näherungsweise deckungsgleich zu den noch nicht gereckten Kunststoffmaterialabschnitt.

Die entsprechende Luft, die über die Ausblasöffnung 301 in Richtung Kunststoffmaterialabschnitt ausgeblasen wird, wird über außenliegende Einsaugöffnungen im Inneren des Ofens befindliche Kammer angesaugt, wobei diese Ansaugöffnungen 305 im gezeigten Ausführungsbeispiel in Form von winkelförmigen Ansaugöffnungen 305' gebildet sind, die jeweils mit einer gewissen Schenkellänge vom jeweiligen Eckbereich aus verlaufen, und dabei vom Eckbereich bis zum Auslaufende in ihrer breiten Erstreckung abnehmen. Die Länge eines jeweiligen Schenkels der winkelförmigen Ansaugöffnung 305' ist kleiner als die halbe Länge des Reckrahmens, so dass jeweils ein Materialabschnitt 307 zurückbleibt der die aufeinander zu weisenden Enden der winkelförmig angeordneten Einsaugschenkelöffnung 305" trennt. Dadurch ergibt sich eine symmetrische Ansaugmöglichkeit mit ausreichender Querschnittsöffnung, die dann von außen kommend über den gesamten Innenraum des Ofen weitere aufgewärmt und dann über die Ausblasöffnung in Richtung Kunststoffmaterialabschnitt abgegeben werden kann. Bei der entsprechenden Darstellung gemäß Figur 14b ist eine Variante gezeigt, wie sie beispielsweise bei einem weiteren Ofen verwendet werden kann, der eine so genannte Annealing-Zone umfasst.

Auch hier ist wiederum eine Ausblasöffnung 301 vorgesehen, die nunmehr aber gegenüber der Ausblasöffnung 301 bei der Ansicht gemäß Figur 14a um ein Vielfaches größer dimensioniert ist, nämlich vorzugsweise in Anpassung und Abstimmung an die Größe und damit Längs- und Quererstreckung des gereckten Kunststoffmaterialabschnitts.

Auch in dieser Variante sind die außenliegenden winkelförmigen Ansaugöffnungen 305 vorgesehen, mit den winkelförmig zueinander verlaufenden Einsaugschenkelöffnungen 305".

Auch in diesem Beispiel wird entsprechend heiße Luft in Richtung des gereckten Kunststoffmaterialabschnitts geblasen, wobei die Temperierung im Ofen an die bezweckte Behandlung des Kunststoffmaterials angepasst bzw. abgestimmt ist.

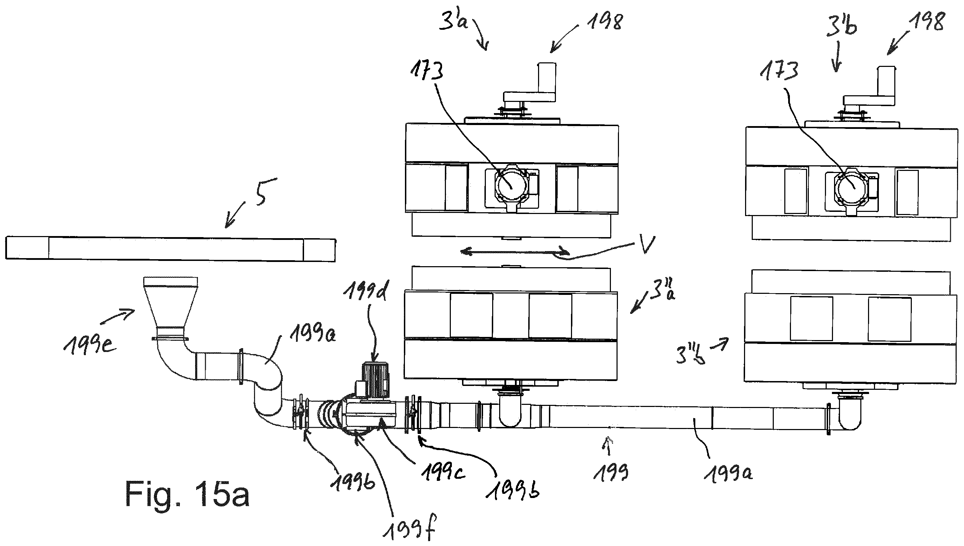

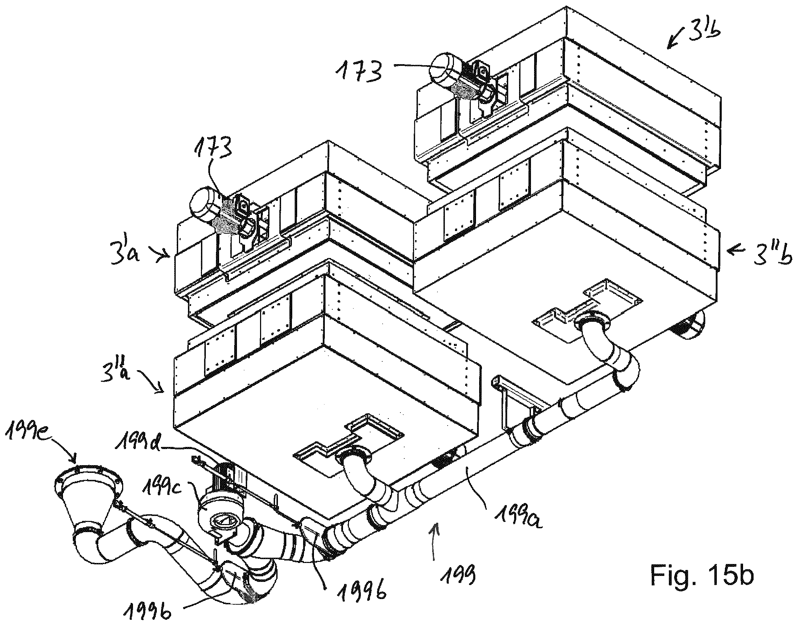

Nachfolgend wird auf die Figuren 15a und 15b Bezug genommen, die einmal in schematischer Seitenansicht und einmal in räumlicher Darstellung die bereits beschriebenen zwei aufeinander folgenden Ofenanordnungen 3a und 3b zeigen, wobei für beide obere Öfen oberhalb der Verfahrstrecke V für den Reckrahmen jeweils ein Ofen mit einer passiven Luftzufuhr 198 vorgesehen ist (und bevorzugt mit den erwähnten Ventilatoren 195). Dabei kann über die Öffnungen 198 (die ggf. mit zusätzlichen Kaminen versehen sein können) entweder manuell oder aber auch beispielsweise automatisch (also automatisch gesteuert) noch eine zusätzliche, auch aktive Kühlung für die oberen Öfen 3'a und 3'b erfolgen, wie dies beispielsweise auch schon in Figur 14 bezüglich der Öffnung 175 auf der Oberseite eines vorzugsweise oberen Ofens gezeigt ist. Die unterhalb der Verfahrstrecke V angeordneten Öfen 3"a und 3"b können über eine aktive Luftzufuhr 199 mit Luft versorgt werden, beispielsweise unter Einsatz von Luftrohren und Luftrohrsystemen 199a, die auch noch beispielsweise mit einer Klappensteuerung 199b und/oder einem Ventilator 199c ausgestattet sein können, der beispielsweise über einen Motor 199d Luft über eine Ansaugöffnung 199f (Ansaugstutzen 199f) ansaugt und über das Rohrsystem den Innenräumen der betreffenden Öfen zuführt.

In Figur 15a und 15b ist ferner mit dem Bezugszeichen 199e eine Ausblaseinrichtung bezeichnet, die im gezeigten Ausführungsbeispiel trichterförmig gestaltet ist (aber auch völlig anders ausgebildet sein kann), wobei über diese Öffnung 199e ein kühles Medium, üblicherweise Luft an die Kluppen herangeführt werden kann, um hierdurch eine Kluppenkühlung zu bewirken.

Abweichend von der vorstehenden Beschreibung ist es auch möglich, dass beispielsweise die unteren Öfen 3"a und 3"b mit einer passiven Luftzuführung beispielsweise unter Verwendung der Der manuell oder automatisch einstellbaren Kaminen (siehe Fig. 15a), die sich an den oberen Öfen 3'a bzw. 3'b gezeigt sind. Diese können alternativ auch mit einer aktiven Kühlung zusätzliche Luft zuführen.

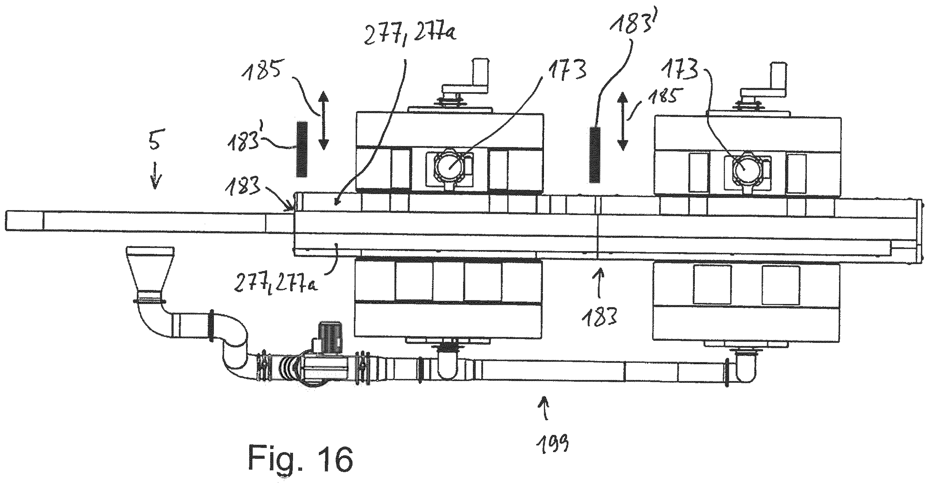

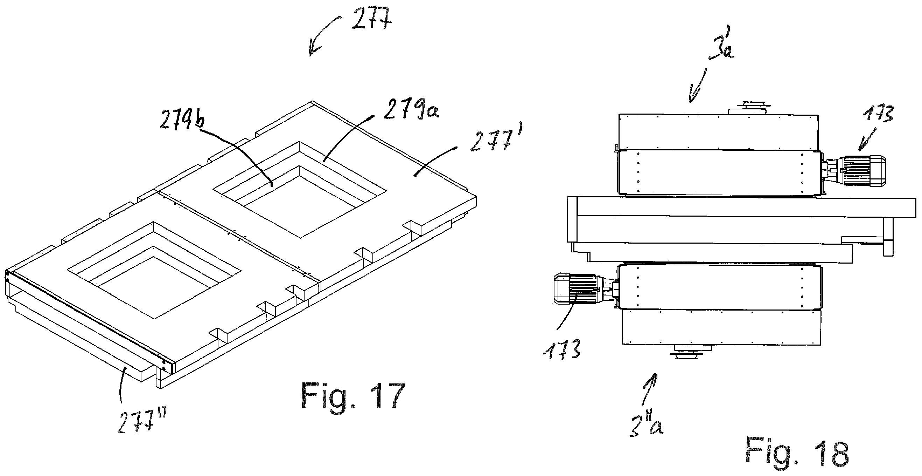

Anhand der Darstellung gemäß Figur 16 und 17 ist gezeigt, dass entsprechende aufeinanderfolgende Öfen oberhalb und unterhalb des verfahrbaren Reckrahmens unter Zwischenschaltung jeweils von Isolierungen 277, vorzugsweise in Form Isolierplatten 277a, angeordnet sind, zwischen der eigentliche Reckrahmen 5 verfahren werden kann. Zusätzlich befinden sich zwischen den beiden bzw. allgemein zwischen zwei aufeinander folgenden benachbarten Öfen Trennstellen bzw. Trenneinrichtungen, beispielsweise in Form von sog. Shuttern 183, an denen eine zusätzliche Isolierplatte 183' in einen hierfür vorgesehenen Spalt geschoben werden kann, um die Einführ- und Ausführöffnungen in oder aus dem jeweiligen Ofen heraus isolieren zu können(siehe Fig. 16). Die vorstehend erläuterten Isolierungen 277 und insbesondere in Form der erwähnten Isolierplatten 277a weisen dort, wo die Öfen oberhalb bzw. unterhalb der jeweiligen Isolierplatte angeordnet sind, eine entsprechende Ausnehmung auf, so dass die Kluppen und die Führungsschienen sowie vor allem der zu reckende Materialabschnitt offen im jeweiligen Ofen zu liegen kommt, und die Beheizung optimal durchgeführt werden kann.

Die erwähnten Isolierungen dienen dazu den Heißluftbereich zum Recken vom Rest der Maschine zu trennen, wodurch sie einen Raum zwischen oberen und unteren Ofen bilden.

In Figur 17 ist dabei in perspektivischer Darstellung die erläuterte Isolierung 277 mit den Isolierplatten 277a separat gezeigt, also ohne die oberen und unteren Öfen. Diese Isolierungen 277 weisen dann entsprechende zentrale Öffnungen 279a bezüglich der dem jeweiligen oberen Ofen 3'a oder beispielsweise 3'b zugewandt liegenden Isolierplatte 277' auf, sowie eine entsprechende untere Öffnung oder Ausnehmung 279b auf, die der jeweils unteren Isolierplatte 277" zugewandt liegt, an der die unteren Öfen 3"a, 3"b etc. positioniert sind.

Schließlich ist anhand von Figur 18 die entsprechende stirnseitige Darstellung von Figur 16 bzw. 17 gezeigt und zwar im montierten Zustand beispielsweise mit dem oberen Ofen 3'a und dem unteren Ofen 3"a.

Ein jeweils erster Ofen 3a dient bevorzugt als Aufwärm- und Reckofen, um den zu reckenden Folienabschnitt vor und/oder während des Reckvorganges auf die optimale Temperatur zu bringen.

Nach Durchführung des Reckvorganges kann der Reckrahmen dann in einen nachfolgenden weiteren Ofen verfahren werden, der beispielsweise als Nachbehandlungsofen dient, bei welchem die Kluppen zumindest in einem Mindestmaß wieder aufeinander zu verfahren werden, um den Folienabschnitt einer gewissen Relaxation unterziehen zu können. Derartige Öfen können auch als Annealing-Zone bezeichnet werden.

Abweichend zu der vorstehend genannten Schilderung sind auch andere Aufbauten oder Aufbaukombinationen der Öfen auch mit anderer Zweckbestimmung möglich. So ist es beispielsweise möglich, dass ein weiterer Reckofen als Nachbehandlungsofen dient und ein dritter Ofen für die so genannten Annealing-Phase zuständig ist. Möglich ist aber ebenso, dass beispielsweise der erste Ofen für eine Maschinenlängsreckung (MD-Reckung) und ein darauffolgender zweiter Ofen für eine Querreckung (TD-Reckung) verwendet wird, und dass schließlich im Falle eines vorgesehenen dritten Ofens dieser dann beispielsweise für die Annealing-Phase vorgesehen ist.

Abweichend von der Darstellung kann nach dem zweiten Ofen, der beispielsweise als zusätzliche Reckzone ausgebildet ist, noch ein weiterer Ofen 3c oder eine weitere Ofenanordnung 3c vorgesehen sein, die beispielsweise als Kühlzone und/oder als weitere Annealingzone fungiert, bei der der Film auf eine bestimmte Temperatur abgekühlt wird (Öfen 3a, 3b, und 3c in Figur 1b). Die verschiedenen Öfen können dabei bei verschiedenen Temperaturen betrieben werden. Außerdem können beispielsweise die oberen Öfen Temperaturen aufweisen, die von den Temperaturen in den unteren Öfen abweichen. Beschränkungen bestehen insoweit ebenso nicht.

Zwischen den einzelnen Ofen oder Ofenzonen können durch Shutterblenden die Durchführöffnungen zu einem benachbarten Ofen annähernd vollständig verschlossen werden. Mit anderen Worten kann der Reckrahmen in seinem Gesamtaufbau und den darin gehaltenen, zu reckenden Folienabschnitten jeweils zwischen einem oberen und einem unteren Ofen verfahren werden, wobei die Seitenabschnitte parallel zur Verfahrrichtung V durch Isolierungen oder Isolierplatten abgedichtet sind, und die in Verfahrrichtung V vor- und nachlaufend angeordnete Öffnungsbereiche zum Hineinführen und zum Herausfahren des Reckrahmens in den Ofen oder aus dem Ofen durch Shutterblenden bevorzugt soweit als möglich, d.h. bevorzugt überwiegend oder fast komplett abgeschlossen werden können, um eine effiziente Wärmebehandlung durchführen zu können. Mit anderen Worten sind die Öfen bevorzugt so ausgestaltet, dass die zugehörige Shutterblenden in Schließstellung die Öffnung eines Ofens zum Ein- und Ausfahren des Reckrahmens zumindest bis zu 90%, insbesondere zu zumindest 91%, 92%, 93%, 94%, 95%, 96%, 97%, 98% oder zu zumindest 99% verschließt.

Ferner soll noch darauf hingewiesen werden, dass die Öfen so ausgestaltet sind, dass jeweils ein Ofen 3a, 3b, 3c so ausgebildet ist, dass er mit einer Temperatur von 300°C +/- weniger als 50°C, insbesondere weniger als 40°C, 30°C, 20°C oder 10°C und zumindest ein anderer Ofen und/oder ein Ofen mit einer Temperatur von 400°C +/- weniger als 50°C, insbesondere weniger als 40°C, 30°C, 20°C oder 10°C beheizt wird und/oder ein dritter Ofen 3c insbesondere für eine zweite Annealing-Phase und/oder eine Temperaturabsenkung oder -kühlung vorgesehen ist.

Dabei können die Öfen beispielsweise mittels Elektroheizern im Umluftbetrieb aufgeheizt werden. Für eine genauere Temperierung kann beispielsweise mit Hilfe eines manuell einstellbaren Luftschiebers nachjustiert werden. Wird eine Abkühlung für einen Ofen benötigt, vor allem für einen letzten Ofen, so ist hierfür bevorzugt eine aktive Kühlung eingebaut, wobei ein Ventilator aktive Luft in den Reckraum einblasen kann.

Abschließend soll noch der Arbeitsablauf kurz erwähnt werden, wie mit dem erfindungsgemäßen Reckrahmen ein Kunststoffmaterialabschnitt gereckt werden kann. Ein Reckvorgang umfasst dabei die folgenden Schritte:
1. Reckrahmen befindet sich in Einlegeposition
2. Einlegen des Kunststoffmaterialabschnitts auf den Einlegetisch
3. Kluppen Schließen und Klemmen den Kunststoffmaterialabschnitt
4. Reckrahmen fährt in den vortemperierten Reckofen, wobei beispielsweise der Kunststoffmaterialabschnitt durch Diffusoren gezielt erwärmt werden kann (Musterausgangsgröße)
5. Kluppen fahren von der Mitte symmetrisch nach außen (jeweils unterteilt in Maschinenlängs- und in Maschinenquerrichtung; es kann beispielsweise für unterschiedliche Reckmuster unterschiedlich gehandhabt werden. Dabei werden die Kluppen in jeder Richtung symmetrisch auseinander gefahren und recken den Kunststoffmaterialabschnitt bevorzugt symmetrisch oder bei Bedarf auch in zwei Schritten nacheinander)
6. Abhängig vom Material des zu reckenden Kunststoffmaterialabschnittes kann der Reckrahmen mit dem Kunststoffmaterialabschnitt in einen weiteren Annealing-Ofen verfahren werden, in welchem ein weiteres Halten oder Recken oder Relaxieren des Kunststoffmaterialabschnittes bei unterschiedlichen oder gleichen Temperaturen möglich ist.
7. Reckrahmen wird aus dem Ofen herausgefahren
8. Kluppen werden geöffnet
9. gerecktes Kunststoffmaterial kann entnommen werden
10. Führungsschienen und darauf sitzenden Kluppen werden in Startposition verfahren (Einlegeposition)

## Patentansprüche

1. Vorrichtung zum mono- oder biaxialen Recken von Kunststoffmaterialabschnitten (41) mittels eines Reckrahmens (5) mit folgenden Merkmalen
- es sind zwei parallel im Abstand zueinander verlaufende und senkrecht dazu verfahrbare erste Führungsschienen (7a, 7b) vorgesehen,
- es sind zwei parallel im Abstand zueinander verlaufende und senkrecht dazu verfahrbare zweite Führungsschienen (9a, 9b) vorgesehen,
- die ersten Führungsschienen (7a, 7b) sind senkrecht zu den zweiten Führungsschienen (9a, 9b) ausgerichtet und so angeordnet, dass alle vier Führungsschienen (7a, 7b; 9a, 9b) in Draufsicht ein Rechteck oder ein Quadrat bilden oder einer Rechteckform oder einem Quadrat angenähert sind,
- auf den beiden ersten und den beiden zweiten Führungsschienen (7a, 7b; 9a, 9b) sind jeweils zumindest zwei Kluppen (19) angeordnet, worüber ein zu reckender Folienabschnitt (41) zur Durchführung eines Reckvorgangs festklemmbar ist,
- die jeweils beiden ersten und die jeweils beiden zweiten Führungsschienen (7a, 7b; 9a, 9b) sind zwischen einer aufeinander zu verfahrenen Startposition (SP) und einer voneinander weg verfahrbaren Endposition (EP) so verfahrbar, dass ein zuvor eingelegter und befestigter Folienabschnitt (41) entweder monoaxial oder biaxial gereckt wird,
**gekennzeichnet durch** die folgenden weiteren Mermale
- die Vorrichtung ist derart aufgebaut, dass neben der Startposition (SP) zu Beginn eines Reckvorganges und der Endposition (EP) nach Durchführung eines Reckvorganges die Führungsschienen (7a, 7b; 9a, 9b) und damit die darauf sitzenden Kluppen (19) zusätzlich noch in eine Bestückungsposition (BP) verfahrbar sind, und
- die Bestückungsposition (BP) ist so angeordnet, dass sie asymmetrisch innerhalb des Reckrahmens (5) liegt und damit zumindest zu einer Längsseite des Reckrahmens (5) näher liegt als zur gegenüberliegenden Reckrahmenseite.

2. Vorrichtung nach Anspruch 1 oder nach dem Oberbegriff des Anspruches 1, **gekennzeichnet durch** das folgende Merkmal:
- die Vorrichtung ist derart aufgebaut, dass zumindest die beiden ersten Führungsschienen (7a, 7b) oder zumindest die beiden zweiten Führungsschienen (9a, 9b) zur Verstellung zwischen ihrer Startposition (SP) und ihrer Endposition (EP) nicht nur voneinander weg oder aufeinander zu verstellbar sind, sondern zur Überführung in eine Bestückungsposition (BP) auch in gleicher Richtung verfahrbar sind.

3. Vorrichtung nach Anspruch 1 oder 2, **dadurch gekennzeichnet, dass** zumindest die beiden Führungsschienen (9a, 9b), die nicht nur aufeinander zu und voneinander weg, sondern auch in gleicher Verstellrichtung verstellbar sind, über getrennte Antriebs- und Kraftübertragungseinrichtungen (37, 38, 39a, 39b, 40; 137, 138, 139a, 139b, 140) antreibbar und verfahrbar sind.

4. Vorrichtung nach Anspruch 3, **dadurch gekennzeichnet, dass** die beiden Führungsschienen (7a, 7b), die nur gemeinsam aufeinander zu oder voneinander weg verfahrbar sind, gemeinsam über einen Antriebsmotor (31) angetrieben und verfahrbar sind und dazu beide Führungsschienen (7a, 7b) über eine gemeinsame umlaufende Kraftübertragungseinrichtung (34) gekoppelt sind, wobei die eine Führungsschiene (7a) am unteren Trum (34a) und die jeweils andere Führungsschiene (7b) am oberen Trum (34b) mitführbar verankert ist, vorzugsweise über einen Mitnehmer (28).

5. Vorrichtung nach einem der Ansprüche 1 bis 4, **dadurch gekennzeichnet, dass** die Startposition (SP) zu Beginn des Reckvorganges mittig oder so nahe zum Zentrum (17) des Reckrahmens (5) angeordnet ist, dass der Reckvorgang insbesondere der biaxiale Reckvorgang symmetrisch durchführbar ist, wobei sich die während des Reckvorganges voneinander weg verfahrbaren Führungsschienen (7a, 7b; 9a, 9b) gleichmäßig weit von der Startposition (SP) entfernen.

6. Vorrichtung nach einem der Ansprüche 1 bis 5, **dadurch gekennzeichnet, dass** das Bestückungsfeld (45) oder der darin zu verbringende Folienabschnitt (41) in der Bestückungsposition (BP) vor Durchführung des Reckverfahrens in Draufsicht auf die Reckanlage eine Position einnimmt und/oder eine Fläche überdeckt, die überlappungsfrei zur Fläche des Folienabschnittes (41) in der Startposition (SP) liegt oder sich nur in eine Teilfläche überlappen, die weniger als 80 %, insbesondere weniger als 70 %, 60 %, 50 %, 40 %, 30 %, 20 % oder weniger als 10 % der Fläche eines zu reckenden Kunststoffmaterialabschnittes 41 vor Durchführung des Reckvorganges beträgt.

7. Vorrichtung nach einem der Ansprüche 1 bis 6, **gekennzeichnet durch** die folgenden Merkmale:
- die an den Führungsschienen (7a, 7b; 9a, 9b) verfahrbar gehaltenen Kluppen (19) sind über eine Tragekonstruktion (49) gehalten,
- zwischen der Tragekonstruktion (49)und der Kluppe (19) und/oder auf der Tragekonstruktion (49) ist eine Kraftmesseinrichtung (51) vorgesehen, wobei die Kluppe (19) über die Tragekonstruktion (49) gehalten ist, und
- die Kraftmesseinrichtung (51) umfasst bevorzugt eine Biegemesseinrichtung oder einen Biegemessstreifen oder einen Dehnungsmessstreifen oder einen Lichtwellenleiter.

8. Vorrichtung nach Anspruch 7, **dadurch gekennzeichnet, dass** die Kraftmesseinrichtung (51) parallel zur der Verstellebene (E) der Führungsschienen (7a, 7b; 9a, 9b) und/oder parallel zu der Einspannebene (E), in der ein zu reckender Folienabschnitt (41) einspannbar ist, verläuft oder in einem Winkel von weniger als 45°, insbesondere weniger als 40°, 35°, 30°, 25°, 20°, 15°, 10° oder weniger als 5° von dieser Verstell- und/oder Einspannebene abweicht.

9. Vorrichtung nach einem der Ansprüche 1 bis 8, **gekennzeichnet durch** die folgenden Merkmale:
- die Vorrichtung umfasst eine Bestückungs- und/oder Entnahmezone (1), in der der Reckrahmen (5) zumindest dann positioniert ist, wenn die Führungsschienen (7a, 7b; 9a, 9b) sich in der Bestückungs- und/oder Entnahmeposition (BP; EP) befinden,
- neben der Bestückungs- und/oder Entnahmezone (1) ist zumindest eine Ofenanordnung (3a, 3b ) vorgesehen, und
- die Ofenanordnung (3a, 3b) umfasst einen oberen Ofen (3'a, 3'b) und einen unteren Ofen (3"a, 3"b), wobei zwischen der Unterseite des oberen Ofen (3'a, 3'b ) und der Oberseite des unteren Ofen (3"a, 3"b ) ein Abstandsraum (93) ausgebildet ist, der groß genug ist, dass der Reckrahmen (5) in diesen Abstandsraum in den Ofen (3a, 3b) verfahrbar ist.

10. Vorrichtung nach einem der Ansprüche 1 bis 9, **dadurch gekennzeichnet, dass** auf der Einlassseite und/oder auf der Auslassseite einer Ofenanordnung (3a, 3b) jeweils eine Shutterblende vorgesehen ist, die zum Ein- oder Ausfahren des Reckrahmens in Öffnungsstellung und zur Durchführung eines Behandlungsschrittes in der Ofenanordnung in Schließstellung verfahrbar ist, vorzugsweise in eine Schließstellung, in der die Shutterblende zumindest zu 91%, 92%, 93%, 94%, 95%, 96%, 97%, 98%, oder zu zumindest 99% die betreffende Öffnung verschließt.

11. Vorrichtung nach einem der Ansprüche 1 bis 10, **dadurch gekennzeichnet, dass** zumindest ein Ofen (3a, 3b) vorgesehen ist, wobei
a) der obere Ofen (3'a, 3'b) und der zugehörige untere Ofen (3"a, 3"b) mit einer passiven Luftzufuhr (198) versehen ist, oder
b) der obere Ofen (3'a, 3'b) und der zugehörige untere Ofen (3"a, 3"b) mit einer aktiven Luftzufuhr (199) versehen sind, oder
c) dass entweder der obere Ofen (3'a, 3'b) oder der untere Ofen (3"a, 3"b) mit einer passiven Luftzufuhr (198) und der jeweils gegenüberliegende Ofen (3"a, 3"b) mit einer aktiven Luftzufuhr (199) oder umgekehrt versehen ist.

12. Vorrichtung nach einem der Ansprüche 1 bis 11, **dadurch gekennzeichnet, dass** der Verfahrbereich (V) für den Reckrahmen (5) innerhalb des einen oder der mehreren Öfen (3a, 3b, 3c) nach oben und nach unten hin mit einer Isolierung (277) isoliert ist, die bevorzugt in Höhe der Unterseite (97) der oberen Öfen (3'a, 3'b) und der Oberseite (99) der unteren Öfen (3"a, 3"b) angeordnet ist, wobei diese Isolierung (277) auf der Unterseite (97) der oberen Öfen (3'a, 3'b) und auf der Oberseite (99) der unteren Öfen (3"a, 3"b) einen entsprechenden Öffnungsbereich aufweisen.

13. Vorrichtung nach einem der Ansprüche 1 bis 12, **dadurch gekennzeichnet, dass** mehrere Öfen (3a, 3b) hintereinander angeordnet sind, wobei in einem ersten Ofen (3a) der zu reckende Folienabschnitt (41) einer Reckung unterziehbar ist, und dass in zumindest einem nachfolgenden Ofen (3b) eine Nachbehandlungsphase für den gereckten Folienabschnitt (41) durchführbar ist und zwar nach Art einer Annealing-Zone und/oder einer Relaxierzone, in welcher gegebenenfalls der Abstand zwischen den Führungsschienen (7a, 7b; 9a, 9b) und damit der jeweils gegenüberliegend angeordneten Kluppen (19) zumindest gegenüber dem Abstand bei Erreichen der Endposition (EP) am Ende des maximalen Reckschrittes wiederum geringfügig verringert wird.

14. Vorrichtung nach einem der Ansprüche 1 - 13, **dadurch gekennzeichnet, dass** die Vorrichtung zwei oder zumindest zwei Öfen (3a, 3b) oder drei oder zumindest drei Öfen (3a, 3b, 3c) umfasst, wobei jeweils ein Ofen (3'a, 3'b) oberhalb und ein Ofen (3"a, 3"b) unterhalb der Verfahrstrecke des Reckrahmens (5) vorgesehen ist.

15. Vorrichtung nach einem der Ansprüche 1 bis 14, **dadurch gekennzeichnet, dass** jeweils ein Ofen (3a, 3b, 3c) so ausgebildet ist, dass er mit einer Temperatur von 300°C +/- weniger als 50°C, insbesondere weniger als 40°C, 30°C, 20°C oder 10°C und/oder zumindest ein Ofen oder ein anderer Ofen mit einer Temperatur von 400°C +/weniger als 50°C, insbesondere weniger als 40°C, 30°C, 20°C oder 10°C beheizt wird und/oder ein dritter Ofen (3c) insbesondere für eine zweite Annealing-Phase und/ oder eine Temperaturabsenkung oder -kühlung vorgesehen ist.

## Claims

1. A device for the uniaxial or biaxial stretching of plastics material portions (41) by means of a stretching frame (5) having the following features:
- two first guide rails (7a, 7b) are provided, which are at a distance from one another and extend in parallel and are movable perpendicularly thereto,
- two second guide rails (9a, 9b) are provided, which at a distance to one another and extend in parallel and are movable perpendicularly thereto,
- the first guide rails (7a, 7b) are aligned perpendicularly to the second guide rails (9a, 9b) and are arranged so that all four guide rails (7a, 7b; 9a, 9b) form a rectangle or a square or approximately a rectangular shape or a square in plan view,
- on the two first and the two second guide rails (7a, 7b; 9a, 9b) at least two respective clips (19) are arranged, by means of which a film portion (41) to be stretched can be clamped for carrying out a stretching process,
- the two first guide rails and the two second guide rails (7a, 7b; 9a, 9b) are movable between a starting position (SP) to be moved towards one another and an end position (EP) movable away from one another such that a previously inserted and fastened film portion (41) is stretched either uniaxially or biaxially,
**characterised by** the following further features:
- the device is constructed such that in addition to the starting position (SP) at the beginning of a stretching process and the end position (EP) after performing a stretching process, the guide rails (7a, 7b; 9a, 9b) and thus the clips (19) seated thereon are additionally movable into a loading position (BP), and
- the loading position (BP) is arranged so that it lies asymmetrically within the stretching frame (5) and is thus at least closer to one longitudinal side of the stretching frame (5) than to the opposite side of the stretching frame.

2. The device according to claim 1 or according to the preamble of claim 1, **characterised by** the following features:
- the device is constructed such that at least the two first guide rails (7a, 7b) or at least the two second guide rails (9a, 9b), for movement between their starting position (SP) and their end position (EP), are not only adjustable away from each other or towards each other, but are also movable in the same direction for the transition into a loading position (BP) .

3. The device according to either claim 1 or claim 2, **characterised in that** at least the two guide rails (9a, 9b), which are not only adjustable towards each other and away from each other, but are also adjustable in the same adjustment direction, may be driven and moved via separate drive and force transmission means (37, 38, 39a, 39b, 40; 137, 138, 139a, 139b, 140).

4. The device according to claim 3, **characterised in that** the two guide rails (7a, 7b), which are only movable jointly towards or away from each other, are jointly driven and moved by a drive motor (31) and to this end both guide rails (7a, 7b) are coupled via a common circumferential force transmission means (34), wherein one guide rail (7a) is anchored at the lower run (34a) and the other guide rail (7b) is anchored at the upper run (34b) in an entrained way, preferably via a follower (28).

5. The device according to any of claims 1 to 4, **characterised in that** the starting position (SP) is arranged at the beginning of the stretching process in a centred location or so close to the centre (17) of the stretching frame (5) that the stretching process, in particular the biaxial stretching process, may be performed symmetrically, wherein the guide rails (7a, 7b; 9a, 9b), which are movable away from each other during the stretching process, recede evenly from the starting position (SP).

6. The device according to any of claims 1 to 5, **characterised in that** the loading area (45) or the film portion (41) to be moved therein, in the loading position (BP) before performing the stretching process, in a plan view onto the stretching unit, assumes a position and/or covers an area that does not overlap the surface of the film portion (41) in the starting position (SP) or overlaps the surface only within a partial area that is less than 80%, in particular less than 70%, 60%, 50%, 40%, 30%, 20% or less than 10% of the area of a plastics material portion 41 to be stretched, before carrying out the stretching process.

7. The device according to any of claims 1 to 6, **characterised by** the following features:
- the clips (19) which are movably held on the guide rails (7a, 7b; 9a, 9b) are held by a support structure (49),
- a force-measuring device (51) is provided between the support structure (49) and the clip (19) and/or on the support structure (49), wherein the clip (19) is held over the support structure (49), and
- the force-measuring device (51) preferably comprises a bending measuring device or a bending measuring strip or a strain gauge or an optical waveguide.

8. The device according to claim 7, **characterised in that** the force-measuring device (51) extends in parallel to the adjustment plane (E) of the guide rails (7a, 7b; 9a, 9b) and/or in parallel to the clamping plane (E), in which a film portion (41) to be stretched may be clamped, or deviates by an angle of less than 45°, in particular less than 40°, 35°, 30°, 25°, 20°, 15°, 10° or less than 5° from this adjustment and/or clamping plane.

9. The device according to any of claims 1 to 8, **characterised by** the following features:
- the device comprises a loading and unloading zone (1) in which the stretching frame (5) is positioned at least when the guide rails (7a, 7b; 9a, 9b) are in the loading and/or unloading position (BP; EP),
- in addition to the loading and/or unloading zone (1) at least one oven arrangement (3a,) is provided, and
- the oven arrangement (3a, 3b) comprises an upper oven (3'a, 3'b) and a lower oven (3"a, 3"b), wherein between the lower side of the upper oven (3'a, 3'b) and the upper side of the lower oven (3"a, 3"b) a spacing (93) is formed, which is large enough that the stretching frame (5) is movable in this spacing into the oven (3a, 3b).

10. The device according to any of claims 1 to 9, **characterised in that** on the inlet side and/or on the outlet side of a oven arrangement (3a, 3b) a respective shutter diaphragm is provided, which is movable for extending or retracting the stretching frame in the open position and for performing a treatment step in the oven arrangement in the closed position, preferably in a closed position, in which the shutter diaphragm closes at least 91%, 92%, 93%, 94%, 95%, 96%, 97%, 98%, or to at least 99% of the relevant opening.

11. The device according to any of claims 1 to 10, **characterised in that** at least one oven (3a, 3b) is provided, wherein
a) the upper oven (3'a, 3'b) and the associated lower oven (3"a, 3"b) are provided with a passive air supply (198), or
b) the upper oven (3'a, 3'b) and the associated lower oven (3"a, 3"b) are provided with an active air supply (199), or
c) either the upper oven (3'a, 3'b) or the lower oven (3"a, 3"b) are provided with a passive air supply (198) and the respective opposite oven (3"a, 3"b) is provided with an active air supply (199) or vice versa.

12. The device according to any of claims 1 to 11, **characterised in that** the travel range (V) for the stretching frame (5) within the one or the plurality of ovens (3a, 3b, 3c) is insulated upwardly and downwardly with an insulation (277), which is preferably positioned at the height of the lower side (97) of the upper ovens (3'a, 3'b) and of the upper side (99) of the lower ovens (3"a, 3"b), wherein this insulation (277) is provided with a corresponding opening region on the lower side (97) of the upper ovens (3'a, 3'b) and on the upper side (99) of the lower ovens (3"a, 3"b).

13. The device according to any of claims 1 to 12, **characterised in that** a plurality of ovens (3a, 3b) are arranged one behind the other, in which in a first oven (3a) the film portion (41) to be stretched may be subject to a stretching, and that in at least one subsequent oven (3b) a post-treatment phase for the stretched film portion (41) may be performed, in particular in the form of an annealing zone and/or a relaxation zone, in which, optionally, the distance between the guide rails (7a, 7b; 9a, 9b) and thus between the respectively oppositely arranged clips (19) is slightly reduced at least with respect to the distance upon reaching the end position (EP) at the end of the maximum stretching step.

14. The device according to any of claims 1 to 13, **characterised in that** the device comprises two or at least two ovens (3a, 3b), or three or at least three ovens (3a, 3b, 3c), wherein in each case one oven (3'a, 3'b) is provided above and one oven (3"a, 3"b) is provided beneath the travel path of the stretching frame (5).

15. The device according to any of claims 1 to 14, **characterised in that** an oven (3a, 3b, 3c) is respectively formed so that it is heated at a temperature of 300°C +/less than 50°C, in particular less than 40°C, 30°C, 20°C or 10°C, and/or at least one oven or another oven is heated at a temperature of 400°C +/- less than 50°C, in particular less than 40°C, 30°C, 20°C or 10°C, and/or a third oven (3c) is provided in particular for a second annealing phase and/or a temperature reduction or cooling.

## Revendications

1. Dispositif d'étirage monoaxial ou biaxial de portions en matière plastique (41) au moyen d'un châssis d'étirage (5), comprenant les éléments suivants :
- il est prévu deux premiers rails de guidage (7a, 7b) s'étendant parallèlement à distance l'un de l'autre et mobiles en sens perpendiculaire,
- il est prévu deux seconds rails de guidage (9a, 9b) s'étendant parallèlement à distance l'un de l'autre et mobiles en sens perpendiculaire,
- les premiers rails de guidage (7a, 7b) sont orientés perpendiculairement aux seconds rails de guidage (9a, 9b) et disposés de telle sorte que tous les quatre rails de guidage (7a, 7b ; 9a, 9b) forment, en vue de dessus, un rectangle ou un carré ou approchent d'une forme rectangulaire ou d'un carré,
- au moins deux pinces (19) sont disposées respectivement sur les deux premiers et sur les deux seconds rails de guidage (7a, 7b ; 9a, 9b), permettant de serrer une portion de feuille à étirer (41) pour mettre en œuvre une opération d'étirage,
- les deux premiers et les deux seconds rails de guidage respectifs (7a, 7b ; 9a, 9b) peuvent être déplacés entre une position initiale (SP) dans laquelle ils sont rapprochés l'un de l'autre, et une position finale (EP) dans laquelle ils peuvent être éloignés l'un de l'autre, de telle sorte qu'une portion de feuille (41) préalablement insérée et fixée est étirée de manière monoaxiale ou biaxiale,
**caractérisé par** les autres éléments suivants :
- le dispositif est conçu de telle sorte qu'outre la position initiale (SP) au début d'une opération d'étirage et la position finale (EP) après la mise en œuvre d'une opération d'étirage, les rails de guidage (7a, 7b ; 9a, 9b) et donc les pinces (19) reposant sur ceux-ci peuvent également être déplacés jusque dans une position de chargement (BP), et
- la position de chargement (BP) est disposée de manière à se trouver asymétriquement à l'intérieur du châssis d'étirage (5) et donc à être plus proche d'au moins un côté long du châssis d'étirage (5) que du côté opposé du châssis d'étirage.

2. Dispositif selon la revendication 1 ou selon le préambule de la revendication 1, **caractérisé par** l'élément suivant :
- le dispositif est conçu de telle sorte qu'au moins les deux premiers rails de guidage (7a, 7b) ou au moins les deux seconds rails de guidage (9a, 9b) sont non seulement déplaçables en éloignement ou en rapprochement l'un de l'autre pour le déplacement entre leur position initiale (SP) et leur position finale (EP), mais peuvent également être déplacés dans le même sens pour le transfert jusque dans une position de chargement (BP).

3. Dispositif selon la revendication 1 ou 2,
**caractérisé en ce que**
au moins les deux rails de guidage (9a, 9b) qui sont non seulement déplaçables en rapprochement ou en éloignement l'un de l'autre, mais aussi dans le même sens de déplacement, peuvent être entraînés et déplacés par des moyens d'entraînement et de transmission de force séparés (37, 38, 39a, 39b, 40 ; 137, 138, 139a, 139b, 140).

4. Dispositif selon la revendication 3,
**caractérisé en ce que**
les deux rails de guidage (7a, 7b) qui ne sont déplaçables que conjointement en rapprochement ou en éloignement l'un de l'autre, sont entraînés et déplaçables conjointement par un moteur d'entraînement (31), et cet à effet les deux rails de guidage (7a, 7b) sont couplés par un moyen de transmission de force (34) commun en recirculation, l'un (7a) des rails de guidage étant ancré de manière embarquée sur le brin inférieur (34a) et l'autre rail de guidage respectif (7b) étant ancré de manière embarquée sur le brin supérieur (34b), de préférence par un entraîneur (28).

5. Dispositif selon l'une des revendications 1 à 4,
**caractérisé en ce que**
la position initiale (SP) au début de l'opération d'étirage est disposée au milieu ou aussi près du centre (17) du châssis d'étirage (5) que l'opération d'étirage, en particulier l'opération d'étirage biaxial, peut être mise en œuvre symétriquement, et les rails de guidage (7a, 7b ; 9a, 9b) se déplaçant en éloignement l'un de l'autre pendant l'opération d'étirage s'éloignent de la même valeur de la position initiale (SP).

6. Dispositif selon l'une des revendications 1 à 5,
**caractérisé en ce que**
le champ de chargement (45) ou la portion de feuille (41) à placer dans celui-ci prend une position et/ou recouvre une surface, dans la position de chargement (BP) avant la mise en œuvre du procédé d'étirage, en vue de dessus sur l'installation d'étirage, position ou surface qui est sans chevauchement avec la surface de la portion de feuille (41) dans la position initiale (SP), ou qui ne chevauche qu'une zone partielle qui est inférieure à 80 %, en particulier inférieure à 70 %, 60 %, 50 %, 40 %, 30 %, 20 % ou inférieure à 10 % de la surface d'une portion en matière plastique à étirer (41) avant la mise en œuvre de l'opération d'étirage.

7. Dispositif selon l'une des revendications 1 à 6,
**caractérisé par** les éléments suivants :
- les pinces (19) maintenues de façon déplaçable sur les rails de guidage (7a, 7b ; 9a, 9b) sont retenues par une construction de support (49),
- un moyen de mesure de force (51) est prévu entre la construction de support (49) et la pince (19) et/ou sur la construction de support (49), la pince (19) étant retenue par la construction de support (49), et
- le moyen de mesure de force (51) comprend de préférence un moyen de mesure de flexion ou une jauge de flexion ou une jauge d'allongement ou un guide d'ondes lumineuses.

8. Dispositif selon la revendication 1,
**caractérisé en ce que**
le moyen de mesure de force (51) s'étend parallèlement au plan de déplacement (E) des rails de guidage (7a, 7b ; 9a, 9b) et/ou parallèlement au plan de serrage (E) dans lequel peut être serrée une portion de feuille à étirer (41), ou bien diffère dudit plan de déplacement et/ou de serrage d'un angle inférieur à 45°, en particulier inférieur à 40°, 35°, 30°, 25°, 20°, 15°, 10° ou inférieur à 5°.

9. Dispositif selon l'une des revendications 1 à 8,
**caractérisé par** les éléments suivants :
- le dispositif comprend une zone de chargement et/ou de prélèvement (1) dans laquelle le châssis d'étirage (5) est positionné au moins lorsque les rails de guidage (7a, 7b ; 9a, 9b) se situent dans la position de chargement et/ou de prélèvement (BP ; EP),
- au moins un ensemble à four (3a, 3b) est prévu à côté de la zone de chargement et/ou de prélèvement (1), et
- l'ensemble à four (3a, 3b) comprend un four supérieur (3'a, 3'b) et un four inférieur (3"a, 3"b), un espace (93) étant ménagé entre la face inférieure du four supérieur (3'a, 3'b) et la face supérieure du four inférieur (3"a, 3"b) qui est suffisamment grand pour que le châssis d'étirage (5) soit déplaçable jusque dans le four (3a, 3b) dans ledit espace.

10. Dispositif selon l'une des revendications 1 à 9,
**caractérisé en ce que**
un obturateur respectif est prévu sur le côté entrée et/ou sur le côté sortie d'un ensemble à four (3a, 3b), qui est déplaçable en position d'ouverture pour entrer ou sortir le châssis d'étirage et qui est déplaçable en position de fermeture pour mettre en œuvre une étape de traitement dans l'ensemble à four, de préférence en une position de fermeture dans laquelle l'obturateur referme l'ouverture correspondante au moins sur 91 %, 92 %, 93 %, 94 %, 95 %, 96 %, 97 %, 98 % ou au moins sur 99 %.

11. Dispositif selon l'une des revendications 1 à 10,
**caractérisé en ce que**
il est prévu au moins un four (3a, 3b) dans lequel
a) le four supérieur (3'a, 3'b) et le four associé inférieur (3"a, 3"b) sont munis d'une alimentation d'air passive (198), ou
b) le four supérieur (3'a, 3'b) et le four associé inférieur (3"a, 3"b) sont munis d'une alimentation d'air active (199), ou
c) soit le four supérieur (3'a, 3'b) soit le four inférieur (3"a, 3"b) est muni d'une alimentation d'air passive (198), et le four opposé respectif (3"a, 3"b) est muni d'une alimentation d'air active (199), ou inversement.

12. Dispositif selon l'une des revendications 1 à 11,
**caractérisé en ce que**
la zone de déplacement (V) pour le châssis d'étirage à l'intérieur de l'un ou des plusieurs fours (3a, 3b, 3c) est isolée vers le haut et vers le bas par une isolation (277) qui est disposée de préférence au niveau de la face inférieure (97) des fours supérieurs (3'a, 3'b) et de la face supérieure (99) des fours inférieurs (3"a, 3"b), ladite isolation (277) présentant une zone d'ouverture correspondante sur la face inférieure (97) des fours supérieurs (3'a, 3'b) et sur la face supérieure (99) des fours inférieurs (3"a, 3"b).

13. Dispositif selon l'une des revendications 1 à 12,
**caractérisé en ce que**
plusieurs fours (3a, 3b) sont disposés les uns derrière les autres, et dans un premier four (3a) la portion de feuille à étirer (41) peut être soumise à un étirage, et dans au moins un four suivant (3b) une phase de post-traitement peut être mise en œuvre pour la portion de feuille étirée (41), à savoir à la manière d'une zone de recuit et/ou d'une zone de relaxation dans laquelle la distance entre les rails de guidage (7a, 7b ; 9a, 9b) et donc les pinces respectives (19) disposées à l'opposé est le cas échéant réduite légèrement au moins par rapport à la distance existant lorsque la position finale (EP) est atteinte à la fin de l'opération d'étirage maximal.

14. Dispositif selon l'une des revendications 1 à 13,
**caractérisé en ce que**
le dispositif comprend deux ou au moins deux fours (3a, 3b) ou trois ou au moins trois fours (3a, 3b, 3c), un four respectif (3'a, 3'b) étant prévu au-dessus de la trajectoire de déplacement du châssis d'étirage (5) et un four respectif (3"a, 3"b) étant prévu au-dessous de celle-ci.

15. Dispositif selon l'une des revendications 1 à 14,
**caractérisé en ce que**
un four respectif (3a, 3b, 3c) est réalisé de manière à être chauffé à une température de 300 °C, à moins de 50 °C près, en particulier à moins de 40 °C, 30 °C, 20 °C ou 10 °C près, et/ou au moins un four ou un autre four est chauffé à une température de 400 °C, à moins de 50 °C près, en particulier à moins de 40 °C, 30 °C, 20 °C ou 10 °C près, et/ou un troisième four (3c) est prévu pour une seconde phase de recuit et/ou pour un abaissement ou refroidissement de la température.
